# EUROPÄISCHE PATENTSCHRIFT

(11) **EP 2 411 221 B1**
(45) Veröffentlichungstag und Bekanntmachung des Hinweises auf die Patenterteilung: **02.10.2013**
(21) Anmeldenummer: 10700948.2
(22) Anmeldetag: 16.01.2010
(51) Int. Cl.: B32B 27/02, B32B 27/12, B32B 37/14, D04H 1/16, D04H 1/54, B32B 27/14

(54) **THERMISCH FIXIERBAARER EINLAGEVLIESSTOFF, VERFAHREN ZU DESSEN HERSTELLUNG UND VERWENDUNG**
THERMALLY FUSIBLE INTERLINING NONWOVEN AND PRODUCTION AND USE THEREOF
TRIPLURE EN NON-TISSÉ THERMOFIXABLE, SON PROCÉDÉ DE FABRICATION ET SON UTILISATION

(30) Priorität: 25.03.2009 DE 102009014290
(43) Veröffentlichungstag der Anmeldung: 01.02.2012
(73) Patentinhaber: Carl Freudenberg KG, 69469 Weinheim (DE)
(72) Erfinder: BARTL, Heike, 69469 Weinheim (DE); STAUDENMAYER, Oliver, 69469 Weinheim (DE); KÜHLWEIN, Thomas, 67229 Laumersheim (DE)
(86) Internationale Anmeldenummer: PCT/EP2010/000228
(87) Internationale Veröffentlichungsnummer: WO 2010/108562

(56) Entgegenhaltungen:
- WO-A1-2006/066601
- DE-A1- 10 352 958
- DE-U1-202007 010 774

## Beschreibung

### Technisches Gebiet

Die Erfindung betrifft einen thermisch fixierbaren Einlagevliesstoff sowie Verfahren zur Herstellung desselben und Verwendungen.

### Stand der Technik

Thermisch fixierbare Einlagen werden vornehmlich in den Bereichen Bekleidung, Automobil, Möbel, Heimtextil, Hygiene eingesetzt. Sie sind üblicherweise textile Flächengebilde wie beispielsweise Gewebe, Gewirke, Vliesstoffe oder Filze mit aufgebrachten Schmelzklebern, die durch Einwirkung von Temperatur, Hitze und Zeit eine dauerhaft haftende Verbindung mit zumeist textilen Substraten wie Oberstoffen ergeben. Durch die Verklebung wird eine Stabilisierung und/oder Formgebung des Substrats erreicht. Die Stärke der Verbindung zwischen textilem Substrat und Einlagestoff wird als Trennkraft bezeichnet. Für die Anwendung wird üblicherweise eine starke und dauerhafte Verbindung zwischen Einlagestoff und textilem Substrat und damit eine gute Trennkraft gewünscht. So soll die Verbindung in einem mit Einlagestoff fixierten Bekleidungsstück auch nach Pflegebehandlung wie beispielsweise Haushaltswäsche noch wirksam sein.

Außerdem sind für den Einsatz in Bekleidung vielfach Einlagestoffe mit geringer Rückvernietung erforderlich. Als Rückvernietung wird das Durchschlagen des Schmelzklebers durch das textile Flächenmaterial, auf das er aufgebracht ist beim thermischen Fixieren mit dem textilen Substrat bezeichnet.

In der WO 2006/066601 A1 ist ein thermoformbares Trägerteil, bekannt, das wenigstens eine Schicht aus einem Spinnvliesstoff mit einem Flächengewicht trocken von 1000 bis 1500 g/m² aufweist. In der DE 20 2007 010774 U1 wird ein mehrschichtiger Geo-Verbund-Werkstoff aus zumindest zwei unterschiedlichen Textilschichten gezeigt.

Thermisch fixierbare Einlagevliesstoffe bestehen üblicherweise aus einem über die gängigen Methoden der Vliesstofferzeugung gebildeten Trägermaterial, üblicherweise einem Spinnfaservliesstoff, auf das thermoplastische Schmelzkleber als Haftmasse aufgetragen (beschichtet) werden. Solche Verfahren werden beispielsweise im "Handbuch der textilen Fixiereinlagen", Prof. Dr. P. Sroka, 3. erweiterte Auflage 1993, Hartung-Gorre Verlag, Konstanz, S. 95-161, beschrieben.

Als Schmelzklebepolymere für Fixiereinlagen werden üblicherweise synthetische thermoplastische Polymere wie Copolyamide, Copolyester, Polyolefine, Ethylen-Vinylacetat-Copolymere oder Polyurethane verwendet. Diese werden üblicherweise in Form einer Paste und/oder eines Pulvers, als Organosol oder Plastisol oder Schmelze auf das Vliesstoffträgermaterial aufgetragen, getrocknet sowie durch thermisches Sintern mit dem Vliesstoff verbunden. Verbreitete Methoden zum Auftrag von Schmelzklebepolymeren sind Pastendruck, Puderpunkt- oder Doppelpunktverfahren.

Der Auftrag des thermoplastischen Schmelzklebepolymers erfolgt nach dem Erzeugen des textilen Trägermaterials über zumindest eine für diesen Zweck bestimmte Auftragseinheit. Die Auftragseinheit für die Schmelzklebepolymere ist dabei zumeist von der die textile Fläche erzeugenden Anlage abgekoppelt, so dass der Auftrag des Schmelzkleberpolymers in einem zusätzlichen, der Faserlegung nachgeschalteten Prozessschritt erfolgt. Thermisch fixierbare Einlage(vlies)stoffe, Schmelzkleberpolymere und entsprechende Auftragsverfahren werden beispielsweise im "Handbuch der textilen Fixiereinlagen", Prof. Dr. P. Sroka, 3. erweiterte Auflage 1993, Hartung-Gorre Verlag, Konstanz, S. 7-400, beschrieben.

In der Anwendung als thermisch fixierbarer Einlagevliesstoff wird der Schmelzkleber unter Einwirkung von Hitze und Druck aufgeschmolzen. Der Einlagevliesstoff wird so über seine mit Schmelzkleber beschichtete Seite zumeist einseitig mit einem textilen Oberstoff verklebt. Die Verklebung des Einlagevliesstoffs mit dem textilen Oberstoff (Fixierung) wird nach dem Stand der Technik unter Einwirkung von Temperatur und gegebenenfalls Druck über eine vorgegebene Zeitdauer durchgeführt. Diese Parameter sind in gewissen, dem Fachmann bekannten Grenzen frei wählbar. So liegen die verwendeten Fixiertemperaturen, um eine thermische Schädigung des textilen Oberstoffs beim Verkleben mit dem fixierbaren Eintagevliesstoff zu vermeiden, üblicherweise in einem Bereich von 60°C bis 165°C, in seltenen Fällen bis 200°C. Die Fixiertemperatur wird in der Regel so eingestellt, dass sie bei oder etwas oberhalb der Schmelz- und/oder Erweichungstemperatur der jeweils verwendeten Schmelzklebers liegt, so dass der Schmelzkleber mit dem textilen Oberstoff verklebt. Es hat sich gezeigt, dass der Schmelzkleber in der Regel auch schon bei Erreichen der Erweichungstemperatur klebrig genug ist, um eine Verklebung mit dem Oberstoff zu ermöglichen.

Die Fixierzeit, in der die Temperatureinwirkung erfolgt, liegt üblicherweise im Bereich von 5 s bis 120 s. Der Druck liegt üblicherweise im Bereich von 0 N/m² bis zu 8x10⁵ N/m². Die Fixierung erfolgt nach dem Stand der Technik mit Fixieraggregaten, bei denen es sich beispielsweise um Pressen (Durchlauf- oder Plattenpressen), oder auch um Bügeleisen handeln kann. Die für die Fixierung relevanten Parameter (Temperatur, Zeit, Druck, Aggregat) werden als Fixierkonditionen bezeichnet.

Wird der Schmelzkleber auf beide Seiten des Vliesstoffs aufgebracht, kann die so hergestellte Einlage beidseitig mit textilen Oberstoffen verklebt werden. Die beidseitige Verklebung textiler Oberstoffe mit thermisch fixierbaren Einlagevliesstoffen wird jedoch viel seltener angewendet.

Nachteilig an den bekannten thermisch fixierbaren Einlagevliesstoffen ist, dass sie nur mit hohem Produktionsausschuss herstellbar sind. Ursache hierfür sind Ungleichmäßigkeiten im Kleberauftrag, die zu Haftungsfehlstellen führen können. Haftungsfehlstellen sind Stellen auf dem Trägermaterial mit zu geringem oder keinem Schmelzkleberauftrag. In der Anwendung werden diese Stellen als Blasen sichtbar und können bei entsprechender Belastung zu einer Ablösung des Vliesstoffs vom textilen Oberstoff führen. Um diese Probleme zu vermeiden, werden Haftungsfehlstellen üblicherweise mittels optischer Inspektion erfasst, zur Verhinderung einer weiteren Verwendung markiert oder mit entsprechendem Verschnitt heraus sortiert und mit Kosten und ökologischer Belastung als Abfall entsorgt.

Die Ursachen für einen ungleichmäßigen Schmelzkleberauftrag sind vielfältig. So können beispielsweise Dicke- und/oder Gewichtsschwankungen des Trägermaterials zu einer ungleichmäßigen Aufnahme des Schmelzklebers führen. Während sich an Stellen mit höherem Gewicht/Dicke des Trägermaterials eine größere Menge an Schmelzkleber anreichern kann, wird an Dünnstellen weniger Schmelzkleber lokalisiert.

Eine weitere Ursache für ungleichmäßigen Schmelzkleberauftrag sind Verzüge in Vliesstoffträgermaterial. Wenn die Vliesstoffbahn aufgrund von Verzügen die Auftragseinheit des Schmelzklebers mit unterschiedlicher Warenspannung durchläuft, können an Stellen mit geringer Materialspannung leicht Falten entstehen. Dort wird im Vergleich zu Bereichen mit höherer Warenspannung weniger oder kein Schmelzkleber übertragen. Verzüge sind prozessbedingt und lassen sich bei der Herstellung von Vliesstoffen nicht verhindern.

Schließlich führen auch Unregelmäßigkeiten wie Verschmutzung der Auftragseinheit, Agglomeration und Inhomogenität der Schmelzklebepolymere sowie elektrostatische Aufladung zu ungleichmäßigem Auftrag derselben auf den Vliesstoff.

Weiterer Nachteil der bekannten thermisch fixierbaren Einlagevliestoffe ist, dass sich insbesondere bei dünnen Oberstoffen mit einer Dicke unter 0,35 mm Dicke oder solchen mit durchbrochener (löchriger) Materialstruktur die Klebemasse nach dem Verkleben auf der Außenseite des Oberstoffs abzeichnen kann, beispielsweise in Form von Erhebungen, die optisch und haptisch erkennbar sind, oder dass der Schmelzkleber auf die nicht mit dem Einlagevliesstoff verklebte Außenseite des textilen Oberstoffs durchschlagen und dort beispielsweise in Form von Erhebungen spürbar und/oder sichtbar werden kann. Solch dünne oder löchrige textile Oberstoffe sind in der Regel mit den herkömmlichen thermisch fixierbaren Einlagevliesstoffen mit nur unbefriedigenden Ergebnissen fixierbar.

Wie in "Handbuch der textilen Fixiereinlagen", Prof. Dr. P. Sroka, 3. erweiterte Auflage 1993, Hartung-Gorre Verlag, Konstanz, Kapitel 6.12., S. 146-152 erörtert, wurden vorübergehend Klebenetze als Ersatz für Fixiereinlagen angeboten, die auf der Netzseite siegelfähig, auf der anderen Seite jedoch klebeinaktiv waren. Solche Netze bestehen aus nicht-unterbrochenen Stegen. Diese Netze haben sich jedoch nicht durchgesetzt, weil der Griff nach dem Fixieren zu stramm und das Volumen zu flach war.

### Aufgabe der Erfindung

Der Efindung liegt die Aufgabe zugrunde, einen einseitig thermisch fixierbaren Einlagevliesstoff mit guten optischen und haptischen Eigenschaften und einem guten und gleichmäßigen Haftungsvermögen und bei Bedarf mit einer geringen Rückvemietung bereitzustellen, welcher einfach und kostengünstig herstellbar ist. Der Einlagevliesstoff soll insbesondere auch bei dünnen Substraten oder solchen mit löchriger Materialstruktur einsetzbar sein. Es soll außerdem ein Spektrum von Einlagevliesstoffen mit unterschiedlichen Griffeigenschaften bereitgestellt werden, das heißt, Einlagestoffe mit festerem und weicherem Griff.

Diese Aufgabe wird gelöst mit einem thermisch fixierbaren Einlagevliesstoff mit allen Merkmalen des Patentanspruchs 1 sowie mit einem Verfahren zur Herstellung eines thermisch fixierbaren Einlagevliesstoffs mit allen Merkmalen des Patentanspruchs 11. Die Patentansprüche 16 und 17 betreffen Textilien, hergestellt nach dem erfindungsgemäßen Verfahren, bzw. Kleidungstücke, die solche Textilien enthalten.

### Darstellung der Erfindung

Ein erfindungsgemäßer thermisch fixierbarer Einlagevliesstoff zeichnet sich dadurch aus, dass er eine Fixierschicht (A) hergestellt aus mindestens einem Spinnfaservlies umfasst, das einen Anteil von wenigstens 50 Gew.-% an verschmolzenen und/oder nicht verschmolzenen thermoplastischen Spinnfasern aufweist, deren Schmelz- und/oder Erweichungstemperatur im Bereich zwischen 60 und 165 °C liegt, die eine durchschnittliche Schnittlänge von 5 mm bis 15 mm und eine Feinheit zwischen 0,5 bis 40 dtex aufweisen sowie eine Schicht (B) aus mindestens einem Spinnfaservlies oder einem Spinnfaservliesstoff aus Spinnfasern, wobei wenigstens 80 Gew.-% der Spinnfasern eine Erweichungs- und Zersetzungstemperatur größer oder gleich 170 °C aufweisen, sowie eine durchschnittliche Schnittlänge von 5 mm bis 150 mm und eine Feinheit zwischen 0,5 bis 40 dtex, wobei die Schichten (A) und (B) über thermische, wasserstrahl-, mechanische, chemische, Ultraschall- oder Laser-Behandlungsmethoden miteinander verbunden sind, wobei die Fixierschicht (A) 5 bis 50 Gew.-% des Gesamtgewichts der Fixiereinlage ausmacht und die Schicht (B) 50 bis 95 Gew.-% des Gesamtgewichts der Fixiereinlage ausmacht, wobei der thermisch fixierbare Einlagevliesstoff keinen zusätzlichen Schmelzkleberauftrag zum Verbinden mit einem textilen Oberstoff aufweist.

Die Angabe Gewichtsprozent (Gew.-%) bezieht sich dabei auf das Gewicht der jeweiligen Schicht (A) oder (B).

Die zu wenigstens 50 Gew.-% in Schicht (A) enthaltenen Spinnfasern mit Schmelz- und/oder Erweichungstemperatur zwischen 60°C und 165°C, unterscheiden sich von den zu 80 % bis 100 Gew.-% in Schicht (B) enthaltenen Spinnfasern mit Erweichungs- und Schmelztemperatur oder, falls nicht vorhanden, Zersetzungstemperatur über 170 °C in wenigstens einem chemischen Baustein.

Der oben beschriebene erfindungsgemäße thermisch fixierbare Einlagevliesstoff weist im Gegensatz zu den aus dem Stand der Technik bekannten schmelzkleberbeschichteten Fixiereinlagen keinen zusätzlichen, beispielsweise auf der Trägeroberfläche aufsitzenden Schmelzkleberauftrag und neben den thermoplastischen Spinnfasern auch keine zusätzlichen Komponenten auf, die bei der Verklebung mit textilen Substraten bei den üblichen Fixierkonditionen, das heißt Temperaturen bis 200°C, Fixierzeit 5 s bis 120 s, Druck 0 N/m² bis zu 8x10⁵ N/m², gegenüber dem textilen Substrat als Kleber wirksam werden und gemessen nach DIN 54310:1980 eine messbare Haftung/Trennkraft ergeben. Die Klebewirkung kommt alleine durch die thermoplastischen Spinnfasern in der Schicht A zustande. Dies ist umso erstaunlicher, als der Fachmann erwarten würde, dass der nach dem Verbinden der Schichten A und B erhaltene Vliesstoff nach dem Fixieren mit textilen Substraten ein zu geringes Haftvermögen und eine zu hohe Rückvernietung aufweisen würde.

So würde der Fachmann erwarten, dass die thermoplastischen Spinnfasern der Schicht A beim Verbinden der Schichten (A) und (B) nicht mehr in einer zur Herstellung einer festen Klebeverbindung ausreichenden Menge in der Schicht (A) verbleiben oder beim Verbinden in hoher Anzahl zur Oberfläche der Schicht (B) transferieren und sich eine unzureichende Trennkraft und hohe Rückvernietung ergibt.

Gleichfalls würde der Fachmann erwarten, dass bei einem derartigen Vliesstoff beim Fixieren mit einem textilen Substrat im gängigen Fixierbereich eine so starke Verklebung der Spinnfasern der Schicht (A) untereinander und/oder mit den Spinnfasern der Schicht (B) erfolgt, dass beim Fixieren solcher Vliesstoffe keine ausreichende Klebewirkung/Trennkraft mit textilen Substraten mehr zustande kommt.

Da die in der Schicht (A) eingesetzten thermoplastischen Spinnfasern im Gegensatz zu den nach dem Stand der Technik in der Regel punktförmig auf den Träger beschichteten Schmelzklebern unter Hitzeeinwirkung ihre Länge verändern und schrumpfen können, überrascht es umso mehr, dass mit einer erfindungsgemäß hergestellten Einlage ein fixiertes textiles Substrat mit gleichmäßiger Optik und Haptik sowie glatter Oberfläche möglich ist.

Bei den üblichen thermischen Verbindungsverfahren, beispielsweise beim Kalandrieren, das in der Regel bei Temperaturen oberhalb der Schmelztemperatur der oben genannten thermoplastischen Spinnfasern der Schicht (A) durchgeführt wird, ist außerdem zu erwarten, dass die thermoplastischen Spinnfasern der Schicht (A) aufschmelzen und beispielsweise an den Kalanderwalzen kleben bleiben und die Schicht (A) dadurch ungleichmäßig wird, oder dass die Spinnfasern in die Schicht (B) einwandern, so dass eine unzureichende Menge an thermoplastischem Material für die Verklebung der Schicht (A) mit dem textilen Substrat übrig bleibt.

In gleicher Weise würde man auch bei Anwendung eines Vernadelungsprozesses, beispielsweise eines Wasserstrahlvernadelungsprozesses, erwarten, dass die thermoplastischen Spinnfasern zu stark mit den Spinnfasern der Schicht (B) vermischt werden bzw. in die Schicht (B) einwandern, da zur Erzeugung einer ausreichend hohen Bindung zwischen den Schichten (A) und (B) relativ hohe Wasserstrahldrücke angewandt werden müssen. Es hat sich aber in überraschender Weise gezeigt, dass auch ein erfindungsgemäßer, durch Wasserstrahlbehandlung verbundener Einlagevliesstoff nach Fixierung mit einem textilen Substrat ein sehr gutes Haftungsvermögen besitzt.

Die erfindungsgemäßen Einlagevliesstoffe besitzen bei üblichen Fixierkonditionen nicht nur ein ausreichend gutes und dauerhaftes Haftvermögen und bei Bedarf eine geringe Rückvernietung, sie zeichnen sich auch beim Verkleben mit textilen Oberstoffen üblicher Dicke nicht auf der nicht mit dem Einlagevliesstoff fixierten Außenseite des textilen Substrats ab und sind dort nicht sichtbar, wodurch sich bei den fixierten Oberstoffen eine sehr gleichmäßige Optik ergibt. Zusätzlich sind innerhalb der mit dem Einlagevliesstoff fixierten Bereiche keine wesentlichen Griffunterschiede fühlbar, so dass mit den erfindungsgemäßen Einlagevliesstoffen eine sehr gleichmäßige Haptik erreicht wird. Überraschenderweise gilt dies selbst für dünne textile oder löchrige Oberstoffe, bei welchen sich mit einem erfindungsgemäßen Einlagevliesstoff ebenfalls eine gleichmäßige Optik und Haptik ergibt.

Mit dem Begriff "thermisch fixierbarer Einlagevliesstoff' wird erfindungsgemäß ein Vliesstoff bezeichnet, der dafür geeignet und bestimmt ist, einseitig über seine Fixierseite mit einem textilen Substrat mit ausreichend guter Haftung verbunden zu werden.

Die erfindungsgemäßen thermisch fixierbaren Einlagevliesstoffe zeichnen sich durch eine ausreichend gute Haftung aus. Eine solche liegt vor, wenn sich nach thermischer Fixierung unter Anwendung üblicher Fixierkonditionen (Temperatur, Druck, Zeit, Aggregat) bei dem mit der Fixiereinlage verbundenen textile Substrat bei einer Trennkraftprüfung nach DIN 54310:1980 mit Abweichungen in Probengröße (Prüfprobe: 150mm x 50mm, Prüfstoff: 160mm x 60mm) und Abzugsgeschwindigkeit (150 mm/min), Fixierpresse Kannegiesser CX 1000 oder Gygli Top Fusing Mod. PR 5/70 mit einem geeigneten textilen Substrat Trennkraftwerte von mindestens 3N ergeben. Die erfindungsgemäßen thermisch fixierbaren Einlagevliesstoffe zeigen, wie weiter unten anhand der Ausführungsbeispiele ersichtlich ist, Trennkraftwerte von deutlich über 3 N. Eine nach der Fixierung, das heißt ohne weitere Behandlung wie Haushaltswäsche, gemessene Trennkraft wird oft auch als Primärhaftung bezeichnet. Eine dauerhafte Haftung ist dann gegeben, wenn nach mindestens einer Haushaltswäsche nach EN ISO 6330:2000 (Verfahren-Nr. 2A, 60°C) beim fixierten Substrat ein Trennkraftwert von noch mindestens 1 N vorliegt. Auch dieser Wert wird, wie man aus den unten gezeigten Tabellen ersehen kann, bei den erfindungsgemäßen Ausführungsbeispielen deutlich überschritten.

Die Schichten (A) und (B) werden vorzugsweise aus einem oder mehreren trockengelegten Spinnfaservliesen hergestellt. Zur Erzeugung der Schicht (B) kann alternativ auch ein trockengelegter Spinnfaservliesstoff verwendet werden. Spinnfaservliese und Spinnfaservliesstoffe zeichnen sich insbesondere auch in leichten Gewichtsklassen unter 100 g/m², wie sie für Einlagevliesstoffe hauptsächlich verwendet werden, durch eine sehr gleichmäßige Gewichts- und Dickenverteilung und eine geschlossene Oberfläche aus. Außerdem ist der Griff bei Spinnfaservliesen und Spinnfaservliesstoffen flexibel einstellbar, da über die Länge der Stapelfasern, Orientierung der Fasern im Spinnfaservlies bzw. -vliesstoff und die einfache Möglichkeit zur Abmischung verschiedener Fasersorten (Faserpolymere) im Spinnfaservlies zahlreiche Freiheitsgrade zur Griffeinstellung bestehen.

Erfindungsgemäß enthalten die Fixierschicht (A) und die Schicht (B) sowie der sich daraus ergebende Einlagevliesstoff als Fasern ausschließlich Spinnfasern angegebener und begrenzter Länge, jedoch keine Endlosfasern (Filamente).

Die Begriffe Spinnfaser, Endlosfasern, Spinnfaservlies und Vliesstoff werden in Anlehnung an die in DIN 60000 (Jan. 1969) festgelegten Definitionen verwendet. Spinnfasern im Sinne der vorliegenden Erfindung sind demnach Fasern begrenzter Länge, während Endlosfasern (Filamente) Fasern praktisch unbegrenzter Länge sind. In dieser Anmeldung wird der Begriff Spinnfasern gemäß J. Lünenschloß, W. Albrecht "Vliesstoffe", Georg Thieme Verlag Stuttgart, New York, 1982 Kapitel 1.2., Abbildung 0.1, S. 3 für Chemie- und Naturfasern das heißt für synthetisch, halbsynthetisch hergestellte Fasern und Naturfasern verwendet. Die Begriffe Spinnvliesstoff und Spinnfaservliesstoff werden entsprechend J. Lünenschloß, W. Albrecht "Vliesstoffe", Georg Thieme Verlag Stuttgart, New York, 1982 S. 106f bzw. S. 68f verwendet.

Das Spinnfaservlies oder die Spinnfaservliese, die die Fixierschicht (A) ergeben, weisen zu 50 Gew.-% bis 100 Gew.-% Spinnfasern aus einem thermoplastischen Material (thermoplastische Spinnfasern) auf, wobei die Schmelz- und/oder Erweichungstemperatur der thermoplastischen Spinnfasern zwischen 60 und 165°C liegt. Damit ist gewährleistet, dass sie bei den üblicherweise verwendeten, eingangs erwähnten Fixiertemperaturen klebrig genug werden, um eine feste Klebeverbindung zum Oberstoff herzustellen. Wird der Anteil von 50 Gew.-% unterschritten, lässt das Klebevermögen zu stark nach.

Thermoplastische Spinnfasern sind dadurch gekennzeichnet, dass sie sich wie thermoplastische Kunststoffe in einem bestimmten Temperaturbereich verformen lassen. Dieser Vorgang ist reversibel, das heißt, er kann durch Abkühlung und Wiedererwärmung wiederholt werden, solange nicht durch Überhitzung eine thermische Zersetzung des Materials erfolgt. Dadurch unterscheiden sich Thermoplaste von Duroplasten und Elastomeren.

Als Erweichungstemperatur (Glasübergangstemperatur Tg) wird diejenige Temperatur bezeichnet, bei dem ein Polymer vom spröden, energie-elastischen (T<Tg) in den weichen entropie-elastischen Bereich (T>Tg) übergeht. Teilkristalline Kunststoffe wie thermoplastische Spinnfasern besitzen sowohl eine Glasübergangstemperatur, als auch eine Schmelztemperatur bei der sich die kristalline Phase auflöst und das Polymer in den flüssigen Zustand übergeht. Die Glasübergangstemperatur von Spinnfasern ist nach ISO 11357-2:1999-03 bestimmbar. Die Schmelztemperatur von Spinnfasern ist nach ISO 3146:2002-06 bestimmbar. Die Erweichungs- und Schmelztemperatur thermoplastischer Spinnfasern erstreckt sich oft über einen mehr oder weniger breiten Bereich, so dass vielfach Temperaturbereiche angegeben werden. Der Begriff Erweichungs- und Schmelztemperatur wird in der vorliegenden Ausführung demnach so verwendet, dass es sich auch um einen Temperaturbereich handeln kann.

Die Zersetzungstemperatur ist diejenige Temperatur oder derjenige Temperaturbereich, oberhalb derer ein Material irreversibel seinen chemischen Aufbau verändert und sich dadurch zersetzt.

Gemäß einer bevorzugten Ausführungsform der Erfindung sind die Schichten (A) und (B) für den Fachmann optisch und/oder haptische unterscheidbar. Vorzugsweise wird, wie nachfolgend noch beschrieben wird, das Verfahren zur Herstellung und/oder zum Verbinden der Schichten (A) und (B) so geführt, dass sich die optische und/oder haptische Unterscheidbarkeit mit ergibt und keine weiteren Verfahrensschritte zur Einstellung der Unterscheidbarkeit erforderlich sind.

Erfindungsgemäß besteht die Schicht (B) zu 80 bis 100 Gew.-% aus Spinnfasern, deren Erweichungs- und Schmelztemperatur oder, falls eine solche nicht vorhanden, deren Zersetzungstemperatur größer oder gleich 170°C ist. Damit ist gewährleistet, dass die Schicht (B) bei den üblicherweise eingesetzten Fixiertemperaturen thermisch stabil bleibt. Gegebenenfalls können die Spinnfasern der Schicht (B) bei oder unterhalb von 170°C aber ihre Länge verändern (thermisch schrumpfen).

Die erfindungsgemäßen Vliesstoffe weisen nach Fixierung mit geeigneten textilen Substraten bei üblichen Fixierkonditionen Trennkraftwerte von mindestens 3N auf gemessen nach DIN 54310:1980 mit Abweichungen in Probengröße (Prüfprobe: 150mm x 50mm, Prüfstoff: 160mm x 60mm) und Abzugsgeschwindigkeit (150 mm/min), Fixierpresse Kannegiesser CX 1000 oder Gygli Top Fusing Mod. PR 5/70

Die erfindungsgemäßen Vliesstoffe weisen Höchstzugkraftwerte in Längsrichtung (Warenlaufrichtung bei der Vliesstoffherstellung) von mindestens 3N auf gemessen nach DIN EN 29073-03:1992 mit Abweichungen in Abzugsgeschwindigkeit (200 mm/min).

Die Höchstzugkräfte sind bei den erfindungsgemäßen Vliesstoffen ein Maß für die Griffeigenschaften. Je niedriger die Höchstzugkräfte sind, desto weicher ist der Griff. Liegen die Höchstzugkräfte im Bereich unter 3N, dann sind die Vliesstoffe nicht mehr handhabbar und würden in der Anwendung zu leicht reißen oder zerstört werden. Entsprechend sind die Höchstzugkräfte, die sich nach dem Fixieren der Fixiereinlage mit dem textilen Substrat ergeben, ein Maß für den Griff des fixierten textilen Substrats.

Bei Bedarf sind bei Textilien, die mit den erfindungsgemäßen Fixiereinlagen versehen wurden, geringe Rückvernietungen im Bereich von 0 bis 3 N, insbesondere < 1 N oder 0N einstellbar. Die Rückvernietung ist dabei gemessen nach DIN 54310:1980 mit den Abweichungen in Probengröße (Prüfprobe 300mmx100mm, Prüfgewebe 300mmx110mm), Abzugsgeschwindigkeit (150 mm/min), Messstrecke (50 mm), Fixierpresse Kannegiesser CX 1000 oder Gygli Top Fusing Mod. PR 5/70. Geringe Rückvernietungen sind in der Anwendung oft erforderlich, um ein Durchschlagen des Haftmediums durch den Vliesstoffträger und Folgeprobleme wie bei gleichzeitiger Fixierung mehrerer übereinandergelegten Einlagestoff/Oberstoffschichten ein Verkleben der Lagen, ein Verschmutzen des Fixieraggregats und/oder eine zu starke Griffverhärtung des fixierten Substrats zu vermeiden

Gemäß einer bevorzugten Ausführungsform der Erfindung weisen die erfindungsgemäßen Einlagevliesstoffe eine gute bis sehr gute optische und/oder haptische Unterscheidbarkeit der Seiten (A) und (B) auf. Dies ist für den Anwender bei der Fixierung der Einlage mit einem textilen Oberstoff vorteilhaft.

Die erfindungsgemäßen Fixiereinlagen weisen eine Dicke von 0,05 mm bis 30 mm auf. Sowohl dünnere als auch dickere Einlagevliesstoffe sind nur schwer herstellbar und/oder handhabbar. Besonders bevorzugt sind Dicken zwischen 0,05 mm und 3 mm, ganz besonders bevorzugt zwischen 0,1 mm und 0,6 mm auf, gemessen nach DIN EN ISO 9073-2 (Februar 1997).

In einer bevorzugten Ausführungsform der Erfindung beträgt der Anteil an thermoplastischen Spinnfasern mit Schmelz- und/oder Erweichungstemperaturen im Bereich von 60 bis 165 °C in der Fixierschicht (A) mindestens 75, besonders bevorzugt 90 Gew.-%. Ganz besonders bevorzugt liegt der Anteil an thermoplastischen Spinnfasern mit Schmelz- und/oder Erweichungstemperaturen im Bereich von 60 bis 165 °C in der Fixierschicht (A) bei 95 bis 100 Gew.-%. Es können somit bis 50, 25, 10, 5 oder 0 Gew.-% nicht thermoplastische Spinnfasern, deren Schmelz- und/oder Erweichungstemperatur über 165°C liegt, in der Fixierschicht (A) enthalten sein.

In einer weiteren bevorzugten Ausführungsform der Erfindung enthält die Fixierschicht (A) thermoplastische Bikomponentenspinnfasern oder besteht aus solchen. Die Bikomponentenspinnfasern bestehen aus Faseranteil mit Schmelz- und/oder Erweichungstemperatur im Bereich 60°C bis 165°C und einem Faseranteil mit einer Schmelz- und/oder Erweichungstemperatur, die größer ist als 165°C. Dabei ist der Faseranteil mit Schmelz- und/oder Erweichungstemperatur im Bereich 60°C bis 165°C nicht ummantelt. Die thermoplastischen Bikomponentenspinnfasern können eine Kern-Mantel- oder side-by-side-Anordnung der Komponenten aufweisen.

Schicht (B) besteht bevorzugt zu mindestens 80 %, besonders bevorzugt zu 90%, ganz besonders bevorzugt zu 95% bis 100 Gew.-% aus homo- und/oder copolymeren Spinnfasern. Die Schmelz- oder Erweichungstemperatur oder, falls nicht vorhanden, die Zersetzungstemperatur der Spinnfasern der Schicht (B) liegt bevorzugt mindestens 10°C, besonders bevorzugt mindestens 35 °C, ganz besonders bevorzugt mindestens 85°C oberhalb von 165°C. Auf diese Weise ist sichergestellt, dass beim Fixieren des Einlagevliesstoffs kein nennenswertes Anschmelzen der Spinnfasern Schicht (B) erfolgt und ein Verschmutzen des Fixieraggregats mit geschmolzenen Spinnfasern der Schicht (B) unterbleibt.

Die zur Erzeugung der Schicht (A) und B verwendeten Spinnfasern weisen eine durchschnittliche Schnittlänge von 5 mm bis 150 mm, vorzugsweise von 10 mm bis 100 mm, besonders bevorzugt bei 20 mm bis 50 mm auf.

In einer bevorzugten Ausführungsform der Erfindung liegen die Schmelz- oder Erweichungstemperatur der thermoplastischen Spinnfasern im Bereich zwischen 75°C und 160°C, besonders bevorzugt zwischen 75°C und 140°C, Schmelz- und/oder Erweichungstemperaturen von 75 bis 140°C werden insbesondere mit Fasern aus Copolyamiden, Copolyestern oder Polyethylen erreicht.

Die in Schicht (A) eingesetzten thermoplastischen Spinnfasern können Homo- oder Copolymere sein. In bevorzugten Ausführungsformen der Erfindung weist eines oder mehrere Spinnfaservliese der Fixierschicht (A) thermoplastische Fasern aus Copolyamid, Polyester, Copolyester, Polyolefin, Polypropylen, Polyethylen, Polyvinylacetat, Ethylenvinylacetat, Polymilchsäure oder (Ethylen)methacrylsäure oder Copolymeren davon auf.

Zur Herstellung des Spinnfaservlieses oder der Spinnfaservliese der Schicht (B) können alle Spinnfasern, die unterhalb 170°C thermisch stabil sind, eingesetzt werden. Das bedeutet, dass Spinnfasern eingesetzt werden können, deren Erweichungs- und Schmelztemperatur oder, falls nicht vorhanden, deren Zersetzungstemperatur höher als 170°C liegen, so dass bei einer Temperatur von 170 °C oder darunter keine Erweichung, Schmelzen oder Zersetzung einsetzt. Gegebenenfalls können die Spinnfasern aber bei/unterhalb von 170 °C aber ihre Länge verändern (thermisch schrumpfen). Die Spinnfasern, die zur Herstellung des Spinnfaservlieses, der Spinnfaservliese oder des Spinnfaservliesstoffes der Schicht (B) verwendet werden, können thermoplastische oder nicht-thermoplastische Fasern sein, die unterhalb 170 °C thermisch stabil sind, und es können entsprechende synthetisch-, halbsynthetisch hergestellte Fasern oder Naturfasern oder Mischungen dieser Fasern zum Einsatz kommen.

In bevorzugten Ausführungsformen der Efindung weist das Spinnfaservlies, die Spinnfaservliese oder der Spinnfaservliesstoffe der Schicht (B) Spinnfasern aus Polyamid, Polyester nativer oder regenerierte Cellulose, m- oder p-Aramid, Melaminharz, Wolle oder gegebenenfalls Copolymere davon auf. Die Spinnfasern werden insbesondere ausgewählt aus der Gruppe der Polyester und/oder der Polyamide.

Die Fixierschicht (A) macht 5 bis 50 Gew.-%, vorzugsweise 10 bis 40 Gew.-%, besonders bevorzugt 15 bis 35 Gew.-%, und die Schicht (B) 50 bis 95 Gew.-%, vorzugsweise 60 bis 90 Gew%, besonders bevorzugt 65 bis 85 Gew-% des Gesamtgewichts der Fixiereinlage aus.

Das Gewicht der Fixierschicht (A) beträgt vorzugsweise mindestens 5g/m²" das der Schicht (B) vorzugsweise mindestens 5g/m².

Die Feinheit der zur Herstellung der Schicht (A) und (B) verwendeten Fasern liegt zwischen 0,5 dtex bis 40 dtex, vorzugsweise zwischen 1,0 dtex bis 10 dtex, besonders bevorzugt 1,3 dtex bis 6 dtex.

Das Flächengewicht der erfindungsgemäßen Fixiereinlage beträgt 10 g/m² bis 300 g/m², vorzugsweise 15 g/m² bis 150 g/m², besonders bevorzugt bei 20 g/m² bis 100 g/m².

Ein Verfahren zur Herstellung eines erfindungsgemäßen thermisch fixierbaren Einlagevliesstoffs umfasst die folgenden Schritte:
a) Bereitstellen einer Fixierschicht (A) aus mindestens einem Spinnfaservlies, das zu 50 Gew.-% bis 100 Gew.-% verschmolzene und/oder nicht verschmolzene thermoplastische Spinnfasern oder in Bikomponentenspinnfasern entsprechende verschmolzene und/oder nicht verschmolzene thermoplastische Spinnfaseranteile aufweist, deren Schmelz- und/oder Erweichungstemperatur im Bereich zwischen 60 und 165°C liegt,
b) Bereitstellen einer Schicht (B) aus mindestens einem Spinnfaservlies oder einem Spinnfaservliesstoff, das/der 80 Gew-% bis 100 Gew-% Spinnfasern aufweist, deren Erweichungs- und Schmelztemperatur oder, falls eine Erweichungs- oder Schmelztemperatur nicht vorhanden sind, deren Zersetzungstemperatur größer als 170°C ist, und
c) Verbinden (C) der Fixierschicht (A) mit Schicht (B).

Die Angabe Gewichtsprozent (Gew.-%) bezieht sich dabei auf das Gewicht der jeweiligen Schicht (A) oder B.

Die Herstellung des oder der Spinnfaservliese der Fixierschicht (A) und der Schicht (B) der erfindungsgemäßen Fixiereinlagen können ohne Beschränkung der Allgemeinheit unter Verwendung der dem Fachmann bekannten Methoden zur Erzeugung trockengelegter Spinnfaservliese geschehen. Diese sind beispielsweise in Lünenschloß, W. Albrecht "Vliesstoffe", Georg Thieme Verlag Stuttgart, New York, (1982) unter Kapitel 2, S. 67-105 beschrieben (1.. Vliesbildung 1.1.1. Spinnfaservliese). Der trockengelegte Spinnfaservliesstoff, der anstatt Spinnfaservliesen als Schicht (B) zum Einsatz kommen kann, kann ebenfalls nach den dem Fachmann bekannten Methoden zur Herstellung trockengelegter Spinnfaservliesstoffe hergestellt werden. Solche Methoden sind beispielsweise in Lünenschloß, W. Albrecht "Vliesstoffe", Georg Thieme Verlag Stuttgart, New York, (1982) Kapitel 1.2-1.2.4 (S.122-225), beschrieben.

Zur Herstellung eines erfindungsgemäßen thermisch fixierbaren Einlagevliesstoffs kommen vorzugsweise wenigstens zwei vliesbildende Anlagen - bei denen es sich um Krempeln und/oder Karden und/oder aerodynamische Vliesbildungsanlagen handeln kann - zum Einsatz, mit denen aus entsprechenden Floren mindestens zwei Spinnfaservliese erzeugt werden. Davon bildet mindestens ein Spinnfaservlies die Fixierschicht (A) und mindestens ein Spinnfaservlies oder alternativ ein Spinnfaservliesstoff die Schicht (B).

Das Bereitstellen der Schicht (A) und der Schicht (B) kann gleichzeitig oder zeitlich versetzt erfolgen.

Zur Verbindung der Fixierschicht (A) mit der Schicht (B) werden die Schichten zusammengeführt und verbunden. Die Verbindung erfolgt über thermische-, wasserstrahl-, mechanische, chemische, Ultraschall- oder Laser-Behandlungsmethoden. Diese Methoden können beliebig kombiniert werden.

Zum Verbinden (C) der Schichten (A) und (B) wird kein zusätzlicher Schmelzkleber oder Komponenten eingesetzt, die bei der Verklebung mit textilen Substraten bei den üblichen Fixierkonditionen, das heißt Temperaturen bis 200°C, Fixierzeit 5 s bis 120 s, Druck 0 N/m² bis zu 8x10⁵ N/m², als Kleber wirksam werden und gemessen nach DIN 54310: 1980 eine messbare Haftung/Trennkraft gegenüber dem textilen Substrat ergeben. Dies hat den Vorteil, dass sich die Komplexität und Kosten des Verfahrens reduzieren, da keine zusätzliche Auftragseinheit für Schmelzkleber erforderlich ist und die mit ungleichmäßigem Schmelzkleberauftrag verbundenen Fehlerquellen und Qualitätsprobleme bei der Fixiereinlage entfallen. Zusätzlich würde ein zusätzlicher Schmelzklebereintrag zu höheren Höchstzugkräften und einem festen Griff führen, der in vielen Anwendungen der Fixiereinlage nicht erwünscht ist.

Überraschenderweise gelingt das Verbinden der Schicht (A) und (B) bei Verwendung speziell angepasster Bedingungen mittels der bekannten Verfahren so, dass keiner oder nur ein geringer Durchschlag von Fasern der Fixierschicht (A) auf Schicht (B) erfolgt. Dies gilt selbst noch bei geringstmöglichem Flächengewicht der Schicht (B) und maximal möglichem Flächengewicht der Schicht (A) und bei allen beanspruchten Verbindungsmethoden. Die dazu erforderlichen Verfahrensparameter kann der Fachmann leicht auffinden.

Die Verfahren zur Verbindung der Schichten und und/oder gegebenenfalls folgende Nachbehandlungen sind grundsätzlich so zu führen, dass ein zu starkes Schrumpfen der thermoplastischen Fasern der Schicht (A) beim Fixieren des Einlagestoffs, das zu einer Ungleichmäßigkeit des fixierten Bereichs wie Wellenbildung führen würde, unterbleibt, was überraschenderweise gelingt.

Eine thermische Behandlung wird im Allgemeinen so geführt, dass zumindest anteilig ein Erweichen und/oder Schmelzen der Spinnfasern der Schicht (B) und/oder A erfolgt. Das Spinnfaservlies wird auf diese Weise thermoplastisch verklebt. Die thermische Verfahren sind dabei so durchzuführen, dass kein Belegen der beheizten Teile der Verfestigungsaggregate, die mit Schicht (A) oder (B) in Berührung kommen, mit geschmolzenen Fasern erfolgt, das die Gleichmäßigkeit der Schicht (A) zerstören und zu Verfestigungsfehlern oder zu einem Abreißen der textilen Fläche führen würde. Überraschenderweise gelingt dies selbst bei niedrigen Flächengewichten der Schichten (A) und (B) und selbst dann, wenn zumindest eine Kalanderwalze auf Temperaturen weit oberhalb der Schmelz- und/oder Erweichungstemperatur der bei niedrigster Temperatur schmelzenden Spinnfasern der Schicht (A) erhitzt ist, was für den Fachmann völlig erstaunlich ist. Bei einigen Co-Polyamidfasern ist die Belegung der Kalanderwalzen mit angeschmolzenen Faserresten im oberen Schmelztemperaturbereich sogar geringer als im unteren Schmelztemperaturbereich, was gleichfalls nicht zu erwarten ist. Je nach dem Grad der Behandlung bleibt die Struktur des Spinnfaservlieses und der Fasern nach der Verbindung von Schicht (A) und (B) erhalten oder geht verloren.

In einer bevorzugten Ausführungsform werden ein oder mehrere trockengelegte Spinnfaservliese der Schicht (B) mit einem oder mehreren Spinnfaservliesen der Fixierschicht (A) zusammengeführt und unter Verwendung eines Kalanders bestehend beispielsweise aus einer beheizten Präge- und einer beheizten Glattwalze mit der Fixierschicht (A) verbunden. Die Prägewalze wird vorzugsweise in Kontakt mit Schicht (B) gebracht. Die Temperatur der Präge- und Glattwalze wird jeweils so eingestellt, dass die zumindest anteilig ein Erweichen der Spinnfasern der Schicht (B) und der Schicht (A) erfolgt. Dies gelingt, indem zwischen den Walzen ein außerordentlich ausgeprägter Temperaturgradient eingestellt wird, wobei die Walze, die in Kontakt mit Seite B steht auf eine deutlich höhere Temperatur als die Walze, die in Kontakt mit Seite A steht, beheizt wird. Bei den Standardverfahren nach dem Stand der Technik ist ein derart ausgeprägter Temperaturgradient nicht üblich. Die beiden Seiten sind nach ihrer Verbindung in der Regel optisch und haptisch unterscheidbar insbesondere durch einen unterschiedlich starken Einbindungsgrad der Fasern der Fixierseite und Nichtfixierseite oder durch ein Verhärten der Fasern auf der Fixierseite.

In einer weiteren bevorzugten Ausführungsform werden ein oder mehrere trockengelegte Spinnfaservliese, bestehend zu 80 Gew% bis 100 Gew% aus Spinnfasern, die eine Erweichungs- und Schmelztemperatur oder, falls nicht vorhanden, eine Zersetzungstemperatur von größer oder gleich 170 °C aufweisen, mit einem Kalander bestehend aus einer beheizten Präge- und einer beheizten Glattwalze zu einem Vliesstoff verfestigt, der die Schicht (B) bildet. Die Bedingungen der thermischen Verfestigung sind über Druck, Verweilzeit und Temperatur sind so einzustellen, dass zumindest anteilig ein Erweichen der Spinnfasern der Schicht (B) und eine Verfestigung zum Vliesstoff erfolgt. Der so erhaltene Vliesstoff (Schicht (B)) wird gegebenenfalls ohne Verwendung von Schmelzkleber nach den dem Fachmann bekannten Verfahren ausgerüstet und/oder gefärbt und danach mit einem oder mehreren Spinnfaservliesen der Fixierschicht (A) zusammengeführt. Die Schichten (A) und (B) werden unter Verwendung eines Kalanders, bestehend aus einer beheizten Präge- und einer beheizten Glattwalze die vorzugsweise in Kontakt mit Schicht (A) kommt verbunden. Dazu wird zwischen den Walzen ein starker Temperaturgradient eingestellt wird, wobei die Walze, die in Kontakt mit Seite B steht auf eine deutlich höhere Temperatur als die Walze, die in Kontakt mit Seite A steht, beheizt wird. Die beiden Seiten des Vliesstoffs sind nach Verbindung der Schichten in der Regel optisch und haptisch unterscheidbar z. B. aufgrund eines unterschiedlich starken Einbindungsgrads der Fasern der Fixierseite und Nichtfixierseite oder durch eine unterschiedliche Farbe der Seiten.

Die Verbindung von Schicht (A) und (B) kann jedoch auch ohne ein solches thermoplastisches Verkleben der Spinnfasern erfolgen, beispielsweise durch Wasserstrahlbehandlung, durch einen mechanischen Trockennadelprozess, oder durch Verkleben mit einem Bindemittel (chemische Behandlung). Erfindungsgemäß kommen im letzteren Fall nur solche Bindemittel zum Einsatz, die nach ihrem Auftrag und Trocknung auf der Fixiereinlage bei der thermischen Fixierung mit dem textilen Substrat nicht als Kleber wirksam werden und gemessen nach DIN 54310: 1980 eine messbare Haftung/Trennkraft gegenüber dem textilen Substrat ergeben.

Wird die Fixierschicht (A) mit der Schicht (B) mittels Wasserstrahlverfestigung verbunden, dann wird das Verfahren vorzugsweise so geführt, dass Schicht (B) die erste Wasserstrahleinstichseite ist und auf Schicht (B) ein höherer Druck als auf Schicht (A) aufgebracht wird. Infolge geringerer Einbindung der Fasern der Fixierschicht (A) weist die Fixierschicht (A) eine geringere Abriebsbeständigkeit und damit eine höhere Flusigkeit und einen weicheren Griff und damit eine optische und haptische Unterscheidbarkeit im Vergleich zu Schicht (B) auf.

Wird die Fixierschicht (A) mit der Schicht (B) mittels eines Nadelprozesses verbunden, dann werden die Schicht (A) und die Schicht (B) übereinander liegend durch einen Nadelstuhl geführt. Um möglichst wenige Fasern der Fixierschicht (A) auf Schicht (B) zu transferieren wird vorzugsweise einseitig vernadelt, mit Schicht (B) als Einstichseite, und es werden Nadeln mit keinen oder nur sehr schwach ausgebildeten Widerhaken verwendet.

Wird die Fixierschicht (A) mit der Schicht (B) chemisch verbunden, dann kann das Bindemittel, das gegebenenfalls weitere Zusätze wie Pigmente enthält, nach den bekannten Verfahren vorzugsweise aufgesprüht oder in Form eines Schaums auf die Warenbahn aufgetragen werden. Bezüglich der erfindungsgemäß einsetzbaren Bindemittel und Zusätze gibt es nur die eine Beschränkung, dass generell nur solche Bindemittel und Zusätze zum Einsatz kommen, die nach Auftrag und Kondensation/Trocknung auf dem Vliesstoff beim thermischen Fixieren gegenüber textilen Substraten nicht keine Klebewirkung der so erzeugten Fixiereinlage mit textilen Substraten ergeben. Zur Verbindung der Schichten (A) und (B) wird die das Bindemittel enthaltene Warenbahn vorzugsweise durch ein beheiztes Aggregat, beispielsweise einen Trockner geführt. Die Temperatur ist dabei so einzustellen, dass eine Trocknung und gegebenenfalls Kondensation des Bindemittels und damit eine Verfestigung zum Vliesstoff erfolgt. Vorzugsweise wird die Trocknung mittels eines Durchsaugtrockners durchgeführt, dessen Temperatur so eingestellt ist, dass auch anteilig ein Erweichen und/oder Schmelzen der Spinnfasern der Schicht (A) erfolgen kann. Bei Verwendung von Bandtrocknern wird die Ware vorzugsweise so geführt, dass Schicht (B) auf dem Band des Trockners aufliegt. Auch eine Trocknung unter Verwendung anderer Aggregate wie zum Beispiel Mikrowellentrockner ist möglich.

In einer anderen bevorzugten Ausführungsform ist das Bindemittel ein UVvernetzbares Bindemittel. Bevorzugte UV-vernetzbare Bindemittel sind Polyester(meth)acrylate, Polyurethan(meth)acrylate, Polyether(meth)-acrylate, gegebenenfalls mit Zusatz geringer Mengen von Reaktivverdünner wie Styrol, mono-, di-, tri- oder tetrafunktionelle Acrylate und/oder Photoinitiatoren wie Azobisisobutylnitril, Benzophenon, α-Hydroxyalkylphenon. Das Bindemittel wird dabei nach bekannten Verfahren aufgebracht, vorzugsweise aber beidseitig als Schaum auf die Warenbahn aufgetragen oder aufgesprüht und mit einer oder mehreren UV-Lampen vernetzt.

Wird die Fixierschicht (A) mit der Schicht (B) mittels Ultraschallbehandlung verbunden, dann wird das Verfahren so geführt, dass zumindest anteilig ein Erweichen und/oder Schmelzen der Spinnfasern der Schicht (B) und/oder A erfolgt. Die Walze des Ultraschallkalanders, bei der es sich bevorzugt um eine Prägewalze handelt, kommt dabei in Kontakt mit Schicht (B).

Die Methoden zur Verbindung können beliebig miteinander kombiniert werden.

Allgemein können nach dem Verbinden der Schichten (A) und (B) weitere Behandlungsmethoden eingesetzt werden.

Auch bei diesen Behandlungsmethoden wird kein zusätzlicher Schmelzkleber oder Komponenten eingesetzt, die bei der Verklebung mit textilen Substraten bei den üblichen Fixierkonditionen, das heißt Temperaturen bis 200°C, Fixierzeit 5 s bis 120 s, Druck 0 N/m² bis zu 8x10⁵ N/m², als Kleber wirksam werden und gemessen nach DIN 54310: 1980 eine messbare Haftung/Trennkraft gegenüber dem textilen Substrat ergeben.

Gemäß einer weiteren bevorzugten Ausführungsform der Erfindung sind im Anschluss an das Verbinden (C) der Schichten (A) und (B) weitere Behandlungsschritte vorgesehen, die eine optisch und/oder haptisch deutlich erkennbare Unterscheidbarkeit der Seite (A) und (B) der erfindungsgemäßen Fixiereinlage ergeben.

Gemäß einer weiteren bevorzugten Ausführungsform führen die Behandlungsschritte zu einer weiteren Verfestigung des Vliesstoffs.

Falls nicht bereits bei der Verbindung von Schicht (A) und (B) erreicht, führen die Behandlungsschritte außerdem zu einer Stabilisierung der Schicht (A) wodurch ein stärkeres Schrumpfen der Spinnfasern beim Fixieren der Einlage, das zu Ungleichmäßigkeiten auf der Außenseite des fixierten textilen Substrats führen würde, unterbleibt.

Als geeignete Behandlungsschritte können mechanische, chemische, thermische, Laser-, Ultraschall- oder Druckverfahren eingesetzt werden.

Ein geeignetes mechanisches Verfahren zur weiteren Behandlung der verbundenen Schicht (A) und (B) und zur Erreichung einer optischen und/oder haptischen Unterscheidbarkeit und gegebenenfalls zur Erreichung einer weiteren Verfestigung des Vliesstoffs und Stabilisierung der Schicht (A) ist beispielsweise mechanisches Prägen, das ohne Temperatur einseitig oder beidseitig durchgeführt werden kann und gegebenenfalls zu einer unterschiedliche Strukturierung der Seiten führt.

Geeignete thermische Verfahren zur Erreichung einer optischen und/oder haptischen Unterscheidbarkeit und gegebenenfalls zur Erreichung einer weiteren Verfestigung des Vliesstoffs und Stabilisierung der Schicht (A) sind beispielsweise thermisches Kalandern mit Präge- und/oder Glattwalzen (Thermobondieren), Hitzebeaufschlagung (in Ofen mit Metallband mit Maschen-, Sieb- oder sonstiger Struktur) oder IR-Behandlung.

In einer bevorzugten Ausführungsform wird der vorzugsweise mittels thermischer, mechanischer, wasserstrahl- oder chemischen Behandlung erhaltene Vliesstoff nach Verbinden der Schicht (A) und (B) mit Hilfe eines Kalanders oder eines Glättwerks mit beheizten Walzen einer thermischen Glättung ausgesetzt. Die Glättung wird dabei so durchgeführt, dass ein Erweichen und/oder Schwelzen der bei tiefster Temperatur schmelzenden Faserkomponente der Schicht (A) erfolgt. Die Schmelz-, Erweichungs- oder Zersetzungstemperatur der höher schmelzenden Fasern wird dabei nicht erreicht. Dadurch wird eine Stabilisierung und Glättung der Schicht (A) sowie eine bessere optische und haptische Unterscheidbarkeit der Seite (A) und (B) erreicht.

Weiterhin bevorzugt ist eine Behandlung, bei der der vorzugsweise mittels thermischer, mechanischer, wasserstrahl- oder chemischen Behandlung erhaltene Vliesstoff nach Verbinden der Schicht (A) und (B) einer Heißluft- oder IR-Behandlung ausgesetzt. Die Temperatur der Behandlung wird dabei so gewählt, dass ein Erweichen und/oder Schmelzen der bei tiefster Temperatur schmelzenden Faserkomponente der Schicht (A) erfolgt. Die Schmelz-, Erweichungs- oder Zersetzungstemperatur der höher schmelzenden Fasern wird dabei nicht erreicht. Dadurch wird und eine zusätzliche Verfestigung der Schicht (A) und durch Verhärtung derselben eine Stabilisierung und zusätzliche haptische Unterscheidbarkeit zur Schicht (B) erreicht.

Wie bei den thermischen Behandlungsverfahren zur Verbindung der Schicht (A) und (B) ist bei thermischen Nachbehandlungsverfahren überraschend, dass bei optimal eingestellten Bedingungen kein Belegen der beheizten Teile des Verfestigungsaggregats die mit den Schichten (A) und (B) in Berührung kommen, wie z. B. der Kalanderwalzen mit angeschmolzenen Fasern, erfolgt. Überraschenderweise treten diese Probleme selbst dann nicht auf, wenn eine Komponente des Verfestigungsaggregats z B. eine Kalanderwalze auf Temperaturen oberhalb der Schmelz- und/oder Erweichungstemperatur der bei niedrigster Temperatur schmelzenden Spinnfasern der Schicht (A) erhitzt wird.

Geeignete chemische Verfahren zur Erreichung einer optischen und/oder haptischen Unterscheidbarkeit und gegebenenfalls zur Erreichung einer weiteren Verfestigung des Vliesstoffs und Stabilisierung der Schicht (A) sind beilspielsweise Streichen oder Drucken. Die chemischen Verfahren können mit oder ohne Einsatz von Bindemitteln erfolgen. Generell kommen bei chemischen Verfahren erfindungsgemäß nur solche Chemikalien (z. B. Bindemittel, Weichgriffmittel) zum Einsatz, nach ihrem Auftrag und Trocknung auf der Fixiereinlage bei der thermischen Fixierung keine Klebeeigenschaft gegenüber dem textilen Substrat entfalten und nicht als Schmelzkleber wirken.

Bei Druckverfahren können alle bekannten Verfahren wie Hoch- oder Stempeldruck (z.B. Reliefdruck), Tiefdruck (z.B. Roulauxdruck), Filmdruck/Siebdruck (z.B. Flachfilmdruck, Rotationsfilmdruck), Transferdruck zum Einsatz kommen.

In einer weiteren bevorzugten Ausführungsform wird der vorzugsweise mittels thermischer, mechanischer, wasserstrahl-, chemischen Ultraschall, oder Laser-Behandlung erhaltene Vliesstoff nach Verbinden der Schicht (A) und (B) an mindestens einem Rand bedruckt. Beispielsweise wird über ein oder mehrere rotierende Stempelsyteme ein wasser- oder lösemittelbasierter Farbstoff oder eine Mischung verschiedener Farbstoffe aufgedruckt, die nach Verdampfen des Wasser- oder Lösemittels auf der Ware antrocknen. Diese Ausführungsform hat den Vorteil, dass eine weitere Unterscheidbarkeit der Seiten A und B erreicht werden kann, ohne den Vliesstoff weiter zu verfestigen und damit haptisch zu verändern.

Die Griffeigenschaften der erfindungsgemäßen Einlagestoffe sind über den Anteil der homo-/oder copolymeren Spinnfasern und den Anteil der thermoplastischen Fasern in Schicht (A), die Möglichkeit der Kombination/Abmischung zahlreicher verschiedener Fasersorten in den Spinnfaservliesen und durch die Faserorientierung flexibel einstellbar. Im Fall von mittels Kalandrierung thermisch verfestigten Einlagevliesstoffen ergeben sich weitere Möglichkeiten der Griffeinstellung über die Struktur der Prägewalze und der daraus resultierenden Verschweißfläche des Vliesstoffs.

Die erfindungsgemäßen Fixiereinlagen zeichnen sich dadurch aus, dass sie neben den thermoplastischen Spinnfasern keine weiteren aktiven oder aktivierbaren Klebepolymere enthalten, die beim Verkleben der Einlage mit anderen textilen Substraten als Kleber wirken.

Die erfindungsgemäßen Fixiereinlagen zeichnen sich bei Fixierung mit geeigneten textilen Substraten unter üblichen Fixierkonditionen durch gute Haftwerte über 3N gemessen nach DIN 54310:1980 mit Abweichungen in Probengröße (Prüfprobe: 150mm x 50mm, Prüfstoff: 160mm x 60mm) und Abzugsgeschwindigkeit (150 mm/min), Fixierpresse Kannegiesser CX 1000 oder Gygli Top Fusing Mod. PR 5/70 sowie durch eine dauerhafte Haftung auch nach Pflegebehandlung Wäsche 1x60°C aus.

Bei Bedarf wird bei Fixierung mit geeigneten textilen Substraten unter üblichen Fixierkonditionen eine geringe Rückvernietung erreicht.

Die erfindungsgemäßen Fixiereinlagen sind insbesondere geeignet für dünne textile Substrate und solche mit durchbrochener/löchriger Materialstruktur, weil sie auf der Außenseite des fixierten textilen Substrats eine optisch und haptisch gleichmäßige Fläche ergeben und die Fixierung bei optimal eingestellten Konditionen ohne Durchschlag von Schmelzkleber erfolgt.

Ein Durchschlag von Schmelzkleber zur Außenseite des textilen Substrats lässt sich auf einfache Weise optisch durch den Farbunterschied den der Schmelzkleber gegenüber Oberstoff ergibt, feststellen. Gegebenenfalls kann zur besseren Kenntlichmachung ein textiles Substrat (Oberstoff), das in Kontrastfarbe zum Schmelzkleber eingefärbt ist, verwendet werden. Ein schwarzer Oberstoff ist so beispielsweise zur Erkennung von weißem Schmelzkleberdurchschlag am besten geeignet.

Andererseits ist es auch möglich, dem Schmelzkleber Farbmittel wie Pigmente zuzusetzen, deren Farbe ein Kontrast zur Farbe des textilen ergibt. Der sich auf der Außenseite des fixierten textilen Substrats durch Schmelzkleberdurchschlag ergebende Kontrast kann nach digitaler Aufnahme beispielsweise mittels Bildbearbeitungsprogrammen quantitativ ausgewertet werden.

Bei dem erfindungsgemäßen Verfahren wird Abfall eingespart, da die bei der Herstellung herkömmlicher Einlagevliesstoffe mit hohem Ausschuss verbundene Schmelzkleberbeschichtung entfällt. So reduziert sich beim erfindungsgemäßen Verfahren die Zahl der Haftungsfehlstellen, wodurch eine geringere Menge an Ausschuss heraus zu sortieren ist. Weiterer Abfall wird dadurch eingespart, dass durch den entfallenden Schritt der Schmelzkleberbeschichtung die Menge an prozessbedingter Ausschussware, die beim Anfahren jeder Produktion im Rahmen der Gewichtseinstellung der Schmelzkleberauflage anfällt, entfällt.

Da das erfindungsgemäße Verfahren die Herstellung von Fixiereinlagen auf der Basis der üblichen spinnfaservliesbildenden Anlagen ohne zusätzliche Beschichtungs- oder Kaschieraggregate erlaubt, ist eine ökonomische, abfall- und Ressourcen schonende Herstellung von thermisch fixierbaren Einlagevliesstoffen möglich.

### Ausführung der Erfindung

### Ausführungsbeispiele:

Die Höchstzugkräfte sind dabei gemessen in Längsrichtung (= Warenlaufrichtung bei der Vliesstoffherstellung) nach DIN EN 29073-03: 1992 mit Abweichungen in Abzugsgeschwindigkeit (200 mm/min).

Die Trennkräfte der Vliesstoffe sind gemessen nach DIN 54310:1980 mit Abweichungen in mit Abweichungen in Probengröße (Prüfprobe: 150mm x 50mm, Prüfstoff: 160mm x 60mm) und Abzugsgeschwindigkeit (150 mm/min), Fixierpresse Kannegiesser CX 1000 oder Gygli Top Fusing Mod. PR 5/70.

Die Trennkraft nach Wäsche wird gemessen nach DIN 54310:1980 mit Abweichungen in mit Abweichungen in Probengröße (Prüfprobe: 150mm x 50mm, Prüfstoff: 160mm x 60mm) und Abzugsgeschwindigkeit (150 mm/min), Fixierpresse Kannegiesser CX 1000 oder Gygli Top Fusing Mod. PR 5/70 nach einer Haushaltswäsche nach EN ISO 6330:2000 (Verfahren-Nr. 2A, 60°C).

Die Rückvernietung der Vliesstoffe ist gemessen nach DIN 54310:1980 mit Abweichungen in Probengröße (Probe 300mmx100mm, Prüfgewebe 300mmx110mm), Abzugsgeschwindigkeit (150 mm/min), Messstrecke (50 mm), Fixierpresse Kannegiesser CX 1000.

Die Dicke ist gemessen nach DIN EN ISO 9073-2:1995.

In den folgenden Beispielen wurden als Fixierschicht (A) trockengelegte Spinnfaservliese und als Schicht (B) trockengelegte Spinnfaservliese oder ein trockengelegter Spinnfaservliesstoff (Beispiel 6) eingesetzt.

Die Spinnfaservliese der Schicht (A) und (B) wurden auf getrennten vliesbildenden Anlagen (Krempeln) erzeugt. Die Herstellung erfolgt nach den dem Fachmann bekannten Verfahren der Trockenvliesbildung unter Verwendung handelsüblicher Krempeln, wobei sowohl eine Längs-, Quer- oder Wirrorientierung der Spinnfasern in den Vliesen erfolgen kann. Die Spinnfaservliese der Schicht (A) und (B) wurden danach verbunden und gegebenenfalls weiter behandelt.

In Beispiel 6 wird als Schicht (B) ein trockengelegter Spinnfaservliesstoff eingesetzt, der aus trockengelegtem Spinnfaservlies erzeugt und nach dem Fachmann bekannter Weise zu einem Vliesstoff verfestigt worden ist.

In den erfindungsgemäßen Verfahren kommen außer thermoplastischen Spinnfasern keine Schmelzkleber oder andere Komponenten, die beim Fixieren der Einlagevliesstoffe mit einem textilen Substrat als Kleber wirken könnten, zum Einsatz.

### Beispiel 1:

Ein mit einer Querkrempel erzeugtes trockengelegtes, quer verstrecktes Spinnfaservlies mit Flächengewicht 18 g/m² (A) bestehend zu 100 Gew.-% aus homopolymeren Polyethylen-Spinnfasern mit Feinheit 2,8 dtex, Schnittlänge 60 mm und mit Schmelztemperaturbereich von 128-133°C gemessen nach ISO 3146: 2002-06 wird mit einem mit einer zweiten Querkrempel erzeugten, trockengelegten, quer verstreckten Spinnfaseraservlies 22 g/m2 (B) und einem mit einer Wirrkrempel erzeugten trockengelegten, wirr orientierten Spinnfaservlies 10g/m2 (B), die jeweils zu 100% aus homopolymeren Polyethylenterephthalat-Spinnfasern mit Feinheit 1,7 dtex, Schnittlänge 38 mm und mit darüber liegendem Schmelztemperaturbereich von 200-260°C bestehen, zusammengeführt und durch mechanische Wasserstrahlverfestigung verbunden. Die Wasserstrahlverfestigung wird dabei so durchgeführt, dass Schicht (B) die erste Wasserstrahleinstichseite ist und auf Schicht (B) ein höherer Druck als auf Fixierschicht (A) aufgebracht wird. Anschließend wird die Ware in einem Trockner bei 110°C getrocknet. Durch die geringere Einbindung der Fasern der Schicht (A) und damit verbundenen höhere Flusigkeit der Fixierseite (A) ist eine sichtbare und fühlbare Unterscheidung zur Nichtfixierseite gegeben. Zum Schluss wird die trockene Ware in einem Glättwerk bestehend aus einer Stahl- und einer gummierten Walze einer thermischen Glättung ausgesetzt. Die Glättung wird bei einem Liniendruck (Einstellwert Kalander) von 60N/mm und einer Temperatur von 90°C gummierte Walze/130°C Stahlwalze durchgeführt. Fixierschicht (A) ist nach der Behandlung wesentlich glatter als die Nichtfixierseite und ist damit optisch und haptisch noch deutlicher als vorher von dieser unterscheidbar.

### Beispiel 2:

Ein mit einer Wirrkrempel erzeugtes trockengelegtes, wirr orientiertes Spinnfaservlies mit Flächengewicht 12 g/m² (A) bestehend zu 100 Gew.-% aus homopolymeren Polyethylen-Spinnfasern mit Feinheit 7 dtex, Schnittlänge 60 mm und Schmelztemperaturbereich von 127-132°C (ISO 3146: 2002-06) wird mit einem mit einer zweiten Wirrkrempel erzeugten, trockengelegten, wirr orientierten Spinnfaservlies mit Flächengewicht 24 g/m² (B) bestehend zu 95% aus homopolymeren Polyethylenterephthalat-Spinnfasern mit Feinheit 1,7 dtex, Schnittlänge 38 mm und mit darüber liegender Schmelztemperaturbereich von 200-260°C und zu 5% aus Polyethylen-Spinnfasern mit Feinheit 2,8 dtex, Schnittlänge 60 mm und mit Schmelztemperaturbereich von 128-133°C zusammengeführt und durch mechanische Wasserstrahlverfestigung verbunden. Die Wasserstrahlverfestigung wird dabei so durchgeführt, dass Schicht (B) die erste Wasserstrahleinstichseite ist und auf Schicht (B) ein höherer Druck als auf Fixierschicht (A) aufgebracht wird. Der erhaltene Vliesstoff nach seiner Wasserstrahlverfestigung feucht durch einen Kalander mit Stahlglatt- und Stahlprägewalze gefahren und gelüftet das heißt ohne Druck bei 126°C leicht strukturiert, wobei auf Schicht (B), die mit der Prägewalze in Kontakt ist eine sichtbar ausgeprägtere Strukturierung erfolgt. Die Warenbahn wird anschließend in einem Trockner bei 110°C getrocknet und aufgerollt.

### Beispiel 3:

Ein mit einer Wirrkrempel erzeugtes trockengelegtes, wirr orientiertes Spinnfaservlies mit Flächengewicht 24 g/m² (A) bestehend zu 100 Gew.-% aus homopolymeren Polyethylen-Spinnfasern mit Feinheit 2,8 dtex, Schnittlänge 60 mm mit Schmelztemperaturbereich von 128-133°C (ISO 3146: 2002-06) wird mit einem mit einer Querkrempel erzeugten trockengelegten, quer verstreckten Spinnfaservlies mit Flächengewicht 40g/m2 (B), das zu 100% aus homopolymeren Polyethylenterephthalat-Spinnfasern mit Feinheit 1,7 dtex, Schnittlänge 38 mm mit darüber liegendem Schmelztemperaturbereich von 200-260°C besteht, zusammengeführt und durch mechanische Wasserstrahlverfestigung verbunden. Die Wasserstrahlverfestigung wird dabei so durchgeführt, daß Schicht (B) die erste Wasserstrahleinstichseite ist und auf Schicht (B) ein höherer Druck als auf Fixierschicht (A) aufgebracht wird. Anschließend wird die Ware in einem Trockner bei 110°C getrocknet. Danach wird am Rand der Nichtfixierseite über ein Stempelsystem ein lösemittelbasierter Farbstoff aufgedruckt und auf der Ware getrocknet.

### Vergleichsbeispiel 3A:

Trockengelegter Spinnfaservliesstoff aus Polyesterspinnfasern mit Flächengewicht 40 g/m², wasserstrahlverfestigt und anschließend im Puderpunktverfahren beschichtet mit 24g/qm Schmelzkleber.

### Beispiel 4:

Ein mit einer Querkrempel trockengelegtes, quer verstrecktes Spinnfaservlies mit Flächengewicht 35g/m2 (B) bestehend zu 100 Gew.-% aus homopolymeren Polyamid6-Spinnfasern mit Feinheit 1,7 dtex, Schnittlänge 40 mm mit Schmelztemperaturbereich von 210-220°C wird mit einem mit einer Wirrkrempel erzeugten, trockengelegten, wirr orientierten Spinnfaservlies mit Flächengewicht 10g/m2 (A) bestehend zu 100% aus homopolymeren Spinnfasern aus Polyethylen mit Feinheit 2,8 dtex, Schnittlänge 60 mm mit Schmelztemperaturbereich von 128-133°C zusammengeführt und in einem Nipco-Kalander mit einer beheizten Präge- und Glattwalze bei einem Liniendruck (Einstellwert Kalander) von 60N/mm und einer Oberflächentemperatur der Prägewalze von 195°C und der Glattwalze von 115°C bei verfestigt. Auf Fixierschicht (A) resultiert eine wesentlich geringere Einbindung der Fasern, wodurch sich auf dieser Seite eine weichere Haptik ergibt.

### Beispiel 5:

Ein mit einer Querkrempel erzeugtes, trockengelegtes, quer verstrecktes Spinnfaservlies mit Flächengewicht 40g/m2 (B) bestehend zu 100 Gew.-% aus homopolymeren Polyethylenterephthalat-Spinnfasern mit Feinheit 1,7 dtex, Schnittlänge 38 mm mit Schmelztemperaturbereich von 200-260°C wird mit einem mit einer Wirrkrempel erzeugten, trockengelegten, wirr orientierten Spinnfaservlies mit Flächengewicht 10g/m² (A) bestehend zu 100% aus homopolymeren Spinnfasern aus Polyethylen mit Feinheit 2,8 dtex, Schnittlänge 60 mm mit Schmelztemperaturbereich 128-133°C zusammengeführt und in einem Nipco-Kalander mit einer beheizten Präge- und Glattwalze bei einem Liniendruck (Einstellwert Kalander) von 60 N/mm und einer Oberflächentemperatur der Prägewalze von 230°C und der Glattwalze von 116°C verfestigt. Anschließend wird am Rand der Nichtfixierseite über ein rotierendes Stempelsystem ein Farbstoff aufgedruckt und auf der Ware getrocknet.

### Vergleichsbeispiel 5A:

Trockengelegter Spinnfaservliesstoff aus Polyethylenterephthalat-spinnfasem thermisch verfestigt mit Flächengewicht 40 g/m² und anschließend im Doppeltpunktverfahren beschichtet mit 10 g/qm Schmelzkleber.

### Beispiel 6:

Ein mit einer Wirrkrempel erzeugter, trockengelegter, wirr orientierter thermisch verfestigter Spinnfaservliesstoff mit Flächengewicht 25g/m2 (B) eingefärbt in Farbe beige bestehend zu 65 Gew.-% aus homopolymeren Polyamid 6-Spinnfasern mit Feinheit 1,7 dtex, Schnittlänge 40 mm und mit Schmelztemperaturbereich von 200-210°C und zu 35% aus homopolymeren weißen Polyethylenterephthalat-Spinnfasern mit Feinheit 1,7 dtex, Schnittlänge 38mm mit Schmelztemperaturbereich von 200-260°C wird mit einem mit einer Wirrkrempel erzeugten trockengelegten, wirr orientierten Spinnfaservlies mit Flächengewicht 12g/m2 (A) bestehend zu 100% aus homopolymeren weißen Polyethylen-Spinnfasern mit Feinheit 2,8 dtex, Schnittlänge 60 mm mit Schmelztemperaturbereich 128-133°C zusammengeführt und unter Verwendung eines Nipco-Kalanders mit einer beheizten Präge- und einer Glattwalze, bei dem die Prägewalze mit einer Oberflächentemperatur von 195°C in Kontakt mit Schicht (B) gebracht und die Glattwalze mit Oberflächentemperatur von 115°C in Kontakt mit Fixierschicht (A) gebracht wird bei einem Liniendruck (Einstellwert Kalander) von 60N/mm verfestigt. Durch den Farbunterschied sind Fixierschicht (A) und (B) optisch eindeutig voneinander unterscheidbar.

### Beispiel 7:

Ein mit einer Wirrkrempel erzeugtes trockengelegtes, wirr orientiertes Spinnfaservlies mit Flächengewicht 50g/m2 (B) bestehend zu 100 Gew.-% aus homopolymeren Polyethylenterephthalat-Spinnfasern mit Feinheit 1,6 dtex, Schnittlänge 38 mm mit Schmelztemperaturbereich von 200-260°C wird mit einem Nipco-Kalander mit beheizter Präge- und unbeheizter Glattwalze mit einer Oberflächentemperatur der Prägewalze von 230°C bei einem Liniendruck (Einstellwert Kalander) von 60 N/mm verfestigt. Die so erhaltene Schicht (B) wird dann mit einem mit einer Wirrkrempel erzeugten trockengelegten, wirr orientierten Spinnfaservlies mit Flächengewicht 40g/m2 (A) bestehend zu 100% aus co-polymeren Polyester/Co-Polyester-Spinnfasern mit Kern-Mantel-Anordnung, wobei das Gewichtsverhältnis Polyester/Co-Polyester in der Spinnfaser 50%/50% beträgt mit Feinheit 2,2 dtex, Schnittlänge 50 mm und mit Schmelztemperaturbereich der tiefer schmelzenden Komponente im Mantel von 110-120°C (Co-Polyester) und der anderen Komponente von 250-260°C (Polyethylenterephthalat) im Kern zusammengeführt und in einem Nipco-Kalander mit einer Präge- und Glattwalze bei einem Liniendruck (Einstellwert Kalander) von 60 N/mm und einer Oberflächentemperatur der Prägewalze von 230°C und der Glattwalze von 105°C verfestigt. Danach wird am Rand der Nichtfixierseite über ein Stempelsystem ein Farbstoff aufgedruckt und auf der Ware getrocknet.

### Beispiel 8:

Ein mit einer Querkrempel erzeugtes, trockengelegtes, quer verstrecktes Spinnfaservlies mit Flächengewicht von 40g/m² (B) bestehend zu 100 Gew% aus homopolymeren Polyethylenterephthalat-Spinnfasern mit Schmelztemperaturbereich von 200-260°C mit Feinheit 1,7 dtex, Schnittlänge 38 mm wird mit einem mit einer Wirrkrempel erzeugten, trockengelegten, wirr orientierten Spinnfaservlies mit Flächengewicht 10g/m2 (A) bestehend zu 100% aus homopolymeren Spinnfasern aus Polyethylen mit Feinheit 2,8 dtex, Schnittlänge 60 mm mit Schmelztemperaturbereich von 128-133°C zusammengeführt und in einem Nipco-Kalander mit einer Präge- und Glattwalze bei einem Liniendruck (Einstellwert Kalander) von 90 N/mm und einer Oberflächentemperatur der Prägewalze von 250°C und der Glattwalze von 132°C verfestigt. Die optische und haptische Unterscheidbarkeit der Seiten ist durch die schwächere Einbindung der Fasern der Fixierschicht (A) gegeben, die zu einem schlechteren Abrieb und zu einer einhergehenden größeren Flusigkeit und weicheren Haptik der Fixierseite (A) im Vergleich zur Nichtfixierseite führt.

### Beispiel 9:

Ein mit einer Querkrempel erzeugtes, trockengelegtes, quer verstrecktes Spinnfaservlies mit Flächengewicht 23g/m2 (B) bestehend zu 50% aus homopolymeren Polyethylenterephthalat-Spinnfasern mit Feinheit 1,7 dtex, Schnittlänge 38 mm mit Schmelztemperaturbereich von 200-260°C und zu 25% aus Viskose mit Feinheit 1,7 dtex, Schnittlänge 40 mm und 25% aus Viskose mit Feinheit 2,8 dtex, Schnittlänge 38 mm wird mit einem mit einer Längskrempel erzeugten, trockengelegten, längs orientierten Spinnfaservlies mit Flächengewicht 9g/qm (A) bestehend zu 5% aus Viskose mit Feinheit 1,7 dtex, Schnittlänge 40 mm und zu 95% aus Spinnfasern aus Polyethylen mit Feinheit 2,8 dtex, Schnittlänge 60 mm mit Schmelztemperaturbereich von 128-133°C zusammengeführt und in einem Imprägnierwerk mit einem Schaum eines Bindemittels auf Basis eines Acrylcopolymeren mit Glasübergangstemperatur T_{g} von -30 imprägniert. Die Auflage des Bindemittels beträgt nach dem Trocknen 7g/m². Die Warenbahn wird anschließend im Trockner bei 120°C getrocknet. Danach wird die Ware durch ein Glättwerk mit zwei beheizten Walzen geführt und geglättet. Die Temperatur der Glättwalze, die mit Seite B in Kontakt steht beträgt 180°C, die Temperatur der Glättwalze die mit Seite A in Kontakt steht beträgt 115°C. Die beiden Seiten der resultierenden Fixiereinlage sind durch ihre unterschiedliche Faserorientierung, Oberflächenglätte und Glanz gut voneinander unterscheidbar.

### Beispiel 10:

Ein mit einer Querkrempel erzeugtes, trockengelegtes, quer verstrecktes Spinnfaservlies mit Flächengewicht 75g/m2 (B) bestehend zu 20% aus homopolymeren Polyethylenterephthalat-Spinnfasern mit Feinheit 3,3 dtex, Schnittlänge 60 mm mit Schmelztemperaturbereich von 200-260°C, zu 10% aus copolymeren Spinnfasern mit Kern/Mantelstruktur aus Polyethylenterephthalat/modifiziertem Polyethylen, wobei das Gewichtsverhältnis Polyethylenterephthalat/modifiziertes Polyethylen in der Spinnfaser 50%/50% beträgt, mit Feinheit 3,0 dtex, Schnittlänge 50 mm mit Schmelztemperaturbereich von 110-130°C (modifiziertes Polyethylen) im Mantel und von 250-260°C (Polyethylenterephthalat) im Kern und zu 70% aus Viskose mit Feinheit 1,7 dtex, Schnittlänge 40 mm wird mit einem mit einer Wirrkrempel erzeugten, trockengelegten, wirr orientierten Spinnfaservlies mit Flächengewicht 25g/m2 (A) bestehend zu 100% homopolymeren Spinnfasern aus Polyethylen mit Feinheit 2,8 dtex, Schnittlänge 60 mm mit Schmelztemperaturbereich von 128-133° zusammengeführt, mechanisch vernadelt und durch einen Trockner mit einer Trocknereinstelltemperatur von 131°C geführt, so dass (B) auf dem Band des Trockners aufliegt. Anschließend wird die Warenbahn über ein beheiztes Glättwerk mit zwei Stahlwalzen bei 105°C und einem Liniendruck (Einstellwert Kalander) von 13 N/mm auf Fixierschicht (A) einseitig geglättet. Fixierschicht (A) ist nach dieser Behandlung wesentlich glatter und ist dadurch haptisch von der Nichtfixierseite zu unterscheiden.

### Beispiel 11:

Ein mit einer Querkrempel erzeugtes trockengelegtes, quer verstrecktes Faservlies mit Flächengewicht 40g/m2 (B) bestehend zu 100 Gew.-% aus homopolymeren Polyethylenterephthalat-Spinnfasern mit Feinheit 1,7dtex, Schnittlänge 38 mm mit Schmelztemperaturbereich von 250-260°C wird mit einem mit einer Wirrkrempel erzeugten, trockengelegten, wirr orientierten Faservlies mit Flächengewicht 15g/m² (A) bestehend zu 100% aus homopolymeren Spinnfasern aus Co-Polyamid mit Feinheit 3,3 dtex, Schnittlänge 51 mm mit Schmelztemperaturbereich 75-135°C zusammengeführt und in einem Nipco-Kalander mit einer beheizten Präge- und Glattwalze bei einem Liniendruck (Einstellwert Kalander) von 60 N/mm und einer Oberflächentemperatur der Prägewalze von 232°C und der Glattwalze von 110°C verfestigt. Die Fixierseite A zeichnet sich nach der Verfestigung durch einen höheren Glanz, einen glatteren Griff und einen im Vergleich zu B besseren Abriebswert aus, wodurch die beiden Seiten gut voneinander unterscheidbar sind.

### Vergleichsbeispiel 11A:

Trockengelegter, Spinnfaservliesstoff aus Polyethylenterephthalat-spinnfasern mit Flächengewicht 40 g/m², thermisch verfestigt und anschließend im Pastenpunktverfahren beschichtet mit 15 g/qm Schmelzkleber.

### Beispiel 12:

Die gemäß den Ausführungsbeispielen 1 bis 11 hergestellten Fixiereinlagen wurden mit textilen Substraten verbunden. Der Verbindungsschritt erfolgte je nach eingesetzter Fixiereinlage bei Temperatur und Druckbedingungen für 12 oder 15 Sekunden. Als Substrat wurde Baumwolle oder 65% Baumwolle/35% Polyester eingesetzt.

Die genauen Bedingungen, Prüfstoffe und Ergebnisse sind den Tabellen 1 und 2 zu entnehmen.

**Tabelle 1: Höchstzugkraft, Trennkraft**

| Abkürzungen: Höchstzugkraft in Längsrichtung: HZK, Trennkraft: TK CO = Baumwolle, PES = Polyethylenterephthalat | | | | | | |
|---|---|---|---|---|---|---|
| **Fixiereinlage** | **HZK längs /N Einlagevliesstoff** | **Fixierung Durchlaufpresse Temperatur/ Druck/Zeit** | **Prüfstoff Faserzusammensetzung Gewicht, Dicke** | **HZK längs /N Verbund Prüfstoff/ Einlagevilesstoff** | **TK/N Primärhaftung** | **TK/N nach 1x Wäsche 60°C** |
| Bsp. 1 | 100,04 | 140/170°C. 1,5x10⁵N/m², 15s Gygli Top Fusing Mod PR 5/70 | 100% CO, 150g/qm, 0,32mm | 618,04 | 3,5 | 4,5 |
| Bsp. 2 | 3,45 | 140/170°C, 1.5x10⁵N/m², 15s Gygli Top Fusing Mod PR 5/70 | 100% CO 150g/qm, 0.32mm | 554,43 | 5,0 | 12,6 |
| Bsp. 3 | 8,28 | 140/170°C 1,5x10⁵N/m², 15s Gygli Top Fusing Mod PR 5/70 | 100% CO 150g/qm, 0,32mm | 506,64 | 12,8 | 55,8 |
| Bsp. 3A Vergleich | 89,59 | 140/170°C, 1,5x10⁵N/m², 15s Gygli Top Fusing Mod PR 5/70 | 100% CO 150g/qm, 0.32mm | 317,72 | 11,9 | 44,9 |
| Bsp. 4 | 9,89 | 130°C, 2,5x10⁵N/m², 12s Kannegiesser CX1000 | 65% CO / 35% PES 175g/qm, 0,28mm | 862,14 | 6,9 Spalt wert | 2,1 Spalt wert |
| Bsp. 5 | 10,96 | 130°C, 2,5x10⁵N/m², 12s Kannegiesser CX1000 | 65% CO / 35% PES 175g/qm, 0,28mm | 923,40 | 10 Spalt wert | 3,1 |
| Bsp. 5A Vergleich | 20,88 | 130°C, 2,5x10⁵N/m², 12s Kannegiesser CX1000 | 65% CO / 35% PES 175g/qm, 0,28mm | 759.78 | 9 Spalt wert | 6,9 |
| Bsp. 6 | 12,72 | 130°C, 2,5x10⁵N/m², 12s Kannegiesser CX1000 | 65% CO / 35% PES 175g/qm, 0.28mm | 953,26 | 7,6 Spalt wert | 8,3 Spaltwert |
| Bsp. 7 | 37,83 | 140/170°C. 1,5x10⁵N/m², 15s Gygli Top Fusing Mod PR 5/70 | 65% CO / 35% PES 175g/qm, 0,28mm | - | 4,2 | - |
| Bsp. 8 | 7,73 | 135°C, 2,5x10⁵N/m², 12s Kannegiesser CX1000 | 100% CO 150g/qm, 0.32mm | 551,54 | 6,5 Spalt wert | 7,1 Spalt wert |
| Bsp. 9 | 35,46 | 130°C, 2,5x10⁵N/m², 12s Kannegiesser CX1000 | 65% CO / 35% PES 175g/qm, 0.28mm | - | 3,8 | - |
| Bsp. 10 | 110,00 | 140°C, 2,5x10⁵N/m², 12s CX1000 | 65% CO / 35% PES 175g/qm, 0,28mm | - | 6,2 | - |
| Bsp. 11 | 15,14 | 120°C, 2,5x10⁵N/m², 12s Kanneqiesser CX1000 | 100% CO 123g/qm, 0,25mm | 864,72 | 7,8 Spalt wert | 3,0 |
| Bsp. 11A Vergleich | 22,81 | 120°C, 2,5x10⁵N/m², 12s Kannegiesser CX1000 | 100% CO 123g/qm, 0.25mm | 880,04 | 6,4 Spalt wert | 10,1 Spalt wert |
| Bsp. 12 | 15,14 | 120°C, 2,5x10⁵N/m², 12s Kanneglesser CX1000 | 100% PES 20g/qm, 0,13mm | 179,30 | 10,1 | 7,0 |
| Bsp. 12A Vergleich | 22,81 | 120°C, 2,5x10⁵N/m², 12s Kannegiesser CX1000 | 100% PES 20g/qm, 0.13mm | 205,51 | 14,4 Spalt wert | 9,1 Spalt wert |

**Tabelle 2: Rückvernietung**

| Abkürzungen: Rückvernietung: SRV | | | |
|---|---|---|---|
| **Fixiereinlage** | **Fixierung Durchlaufpresse Temperatur / Druck / Zeit** | **Prüfstoff Faserzusammensetzung Gewicht, Dicke** | **SRV/N** |
| Bsp.1 | 140/170°C, 1.5x10⁵N/m², 15s Gygli Top Fusing Mod PR 5/70 | 65% CO / 35% PES 175g/qm, 0,28mm | 0,39 |
| Bsp.2 | 140/170°C, 1.5x10⁵N/m², 15s Gygli Top Fusing Mod PR 5/70 | 65% CO / 35% PES 175g/qm, 0,28mm | 0,70 |
| Bsp.3 | 140/170°C, 1,5x10⁵N/m², 15s Gygli Top Fusing Mod PR 5/70 | 65% CO / 35% PES 175g/qm, 0,28mm | 2,43 |
| Bsp. 3A Vergleich | 140/170°C, 1,5x10⁵N/m², 15s Gygli Top Fusing Mod PR 5/70 | 65% CO / 35% PES 175g/qm, 0,28mm | 6,87 |
| Bsp.4 | 130°C, 2,5 x10⁵N/m², 15s Kannegiesser CX1000 | 65% CO / 35% PES 175g/qm, 0,28mm | 0 |
| Bsp. 5 | 130°C, 2,5 x10⁵N/m², 12s Kannegiesser CX1000 | 65% CO / 35% PES 175g/qm, 0,28mm | 0,3 |
| Bsp. 5A Vergleich | 130°C, 2,5 x10⁵N/m², 12s Kannegiesser CX1000 | 65% CO / 35% PES 175g/qm, 0,28mm | 0,3 |
| Bsp. 6 | 130°C, 2,5 x10⁵N/m², 12s Kannegiesser CX1000 | 65% CO / 35% PES 175g/qm, 0,28mm | 0,19 |
| Bsp. 7 | 140/170°C, 1,5x10⁵N/m², 15s Gygli Top Fusing Mod PR 5/70 | 65% CO / 35% PES 175g/qm, 0,28mm | 0 |
| Bsp. 8 | 135°C, 2,5 x10⁵N/m², 15s Kannegiesser CX1000 | 65% CO / 35% PES 175g/qm, 0,28mm | 1,67 |
| Bsp. 9 | 130°C, 2,5 x10⁵N/m², 12s Kannegiesser CX1000 | 65% CO / 35% PES 175g/qm, 0,2mm | 0 |
| Bsp. 10 | 140°C, 2,5 x10⁵N/m², 12s Kannegiesser CX1000 | 65% CO / 35% PES 175g/qm, 0,28mm | 0 |
| Bsp. 11 | 120°C, 2,5 x10⁵N/m², 12s Kannegiesser CX1000 | 100% CO 123g/qm, 0,25mm | 0,06 |
| Bsp. 11A Vergleich | 120°C, 2,5 x10⁵N/m², 12s | 100% CO 123g/qm, 0,25mm | 0,1 |
| Bsp. 12 | 120°C, 2,5 x10⁵N/m², 12s Kannegiesser CX1000 | 100% PES 20g/qm, 0,13mm | 0 |
| Bsp. 12A Vergleich | 120°C, 2,5 x10⁵N/m², 12s Kannegiesser CX1000 | 100% PES 20g/qm, 0,13mm | 0,09 |

Man erkennt in Tabelle 1, dass die erfindungsgemäßen Einlagevliesstoffe sich nicht nur durch eine sehr gute Primärhaftung (deutlich größer als 3 N), sondern auch noch durch eine ebenso gute Dauerhaftigkeit der Haftung (deutlich größer 1 N nach 1 x Wäsche bei 60 °) auszeichnen.

Weiterhin ist erkennbar, dass die Höchstzugkräfte des Verbundes aus Einlagevliesstoff und Oberstoff(=Prüfstoff), die ein Maß für die Griffeigenschaften des Verbundes sind, über einen sehr weiten Bereich von einem sehr weichen bis zu einem festen Griff variierbar sind.

Bei einem Vergleich mit den in der Tabelle ebenfalls aufgeführten Vergleichsbeispielen fällt auf, dass die erfindungsgemäßen Einlagevliesstoffen, obwohl sie wesentlich einfacher und kostengünstiger herstellbar sind, den herkömmlichen Fixiereinlagen in ihren Eigenschaften in nichts nachstehen.

Obiges gilt auch hinsichtlich der Rückvernietungswerte, wie aus Tabelle 2 ersichtlich ist.

Dass die erfindungsgemäßen thermisch fixierbaren Einlagevliesstoffe auch bei dünnen Oberstoffen oder solchen mit löchriger Materialstruktur erfolgreich einsetzbar sind, wird aus den Figuren deutlich.

Es zeigen:

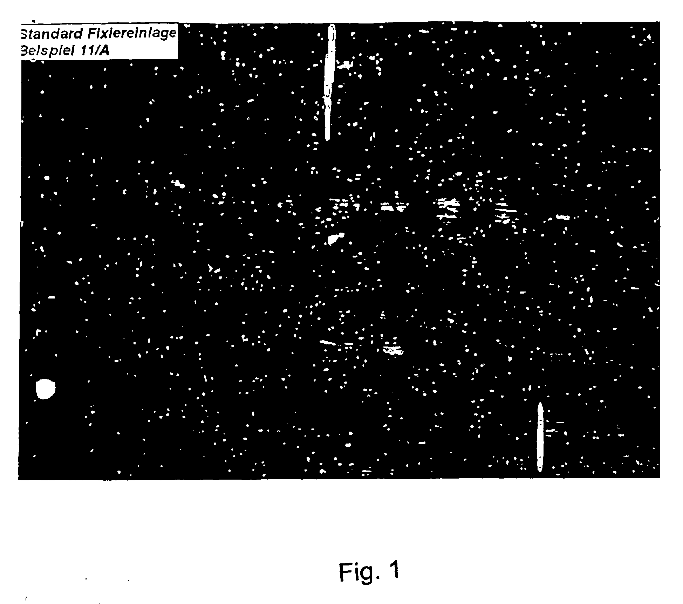

- Figur 1:: die Standardvlieseinlage aus Beispiel 11A fixiert auf einem Oberstoff mit löchriger Materialstruktur;
- Figur 2:: der erfindungsgemäße Einlagevliesstoff aus Beispiel 11 fixiert auf dem gleichen Oberstoff.

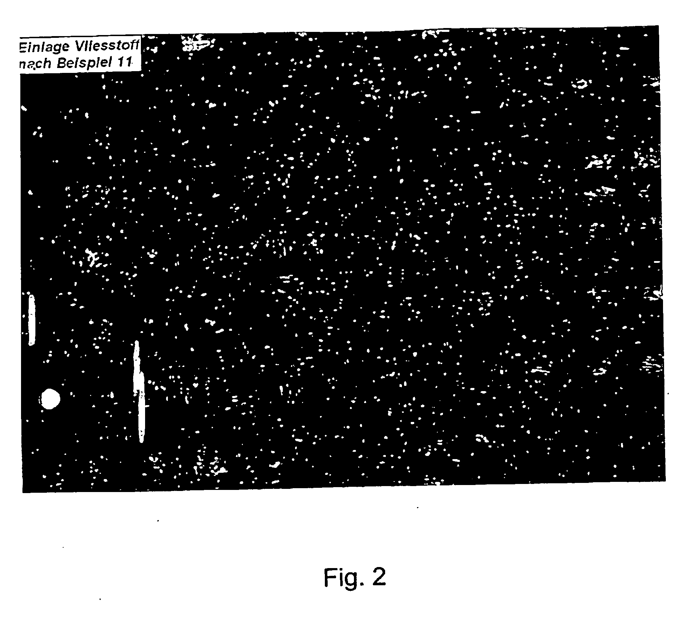

Man erkennt in Fig: 1 bei der Standardvlieseinlage einen durchgeschlagenen Schmelzkleberpunkt (rot umrandet), während sich der erfindungsgemäße Einlagevliesstoff auf dem gleichen Oberstoff, wie aus Fig. 2 ersichtlich ist, durch eine gleichmäßige Optik und Haptik auszeichnet.

## Patentansprüche

1. Thermisch fixierbarer Einlagevilesstoff, umfassend
a) eine Fixierschicht (A) aus mindestens einem Spinnfaservlies, das einen Anteil von wenigstens 50 Gew.-% (bezogen auf die Schicht (A)) an verschmolzenen und/oder nicht verschmolzenen thermoplastische Spinnfasern aufweist, deren Schmelz- und/oder Erweichungstemperatur im Bereich zwischen 60 und 165 °C liegt, die eine durchschnittliche Schnittlänge von 5 mm bis 150 mm und eine Feinheit zwischen 0,5 bis 40 dtex aufweisen sowie
b) eine Schicht (B) aus mindestens einem Spinnfaservlies oder einem Spinnfaservliesstoff, das/der einen Anteil von 80 Gew.-% bis 100 Gew.-% (bezogen auf die Schicht (B)) an Spinnfasern aufweist, die eine Erweichungs- und Schmelztemperatur oder, falls nicht vorhanden, eine Zersetzungstemperatur größer als 170 °C aufweisen sowie eine durchschnittliche Schnittlänge von 5 mm bis 150 mm und eine Feinheit zwischen 0,5 bis 40 dtex, wobei
c) die Schichten (A) und (B) über thermische, wasserstrahl-, mechanische, chemische, Ultraschall- oder Laser- Behandlungsmethoden miteinander verbunden sind, wobei
d) die Fixierschicht (A) 5 bis 50 Gew.-% des Gesamtgewichts der Fixiereinlage ausmacht und die Schicht (B) 50 bis 95 Gew.-% des Gesamtgewichts der Fixiereinlage ausmacht;
**dadurch gekennzeichnet, dass** der thermisch fixierbare Einlagevliesstoff keinen zusätzlichen Schmelzkleberauftrag zum Verbinden mit einem textilen Oberstoff aufweist.

2. Thermisch fixierbarer Einlagevliesstoff nach Anspruch 1, **dadurch gekennzeichnet, dass** die Schmelz- oder Erweichungstemperatur der thermoplastischen Fasern der Schicht (A) zwischen 75 °C und 140 °C liegt.

3. Thermisch fixierbarer Einlagevliesstoff nach einem der vorhergehenden Ansprüche, **dadurch gekennzeichnet, dass** das Spinnfaservlies der Fixierschicht (A) thermoplastische Fasern aus Copolyamid, Polyester, Copolyester, Polyolefin, Polypropylen, Polyethylen, Polyvinylacetat, Ethylenvinylacetat, Polymilchsäure oder (Ethylen)methacrylsäure; oder Copolymeren davon aufweist.

4. Thermisch fixierbarer Einlagevliesstoff nach einem der vorhergehenden Ansprüche, **dadurch gekennzeichnet, dass** das Spinnfaservlies bzw. der Spinnfaservliesstoff der Schicht (B) Fasern aus Polyamid, Polyester, nativer oder regenerierte Cellulose, m- oder p-Aramid, Melaminharz, Wolle oder Copolymeren davon aufweist.

5. Thermisch fixierbarer Einlagevliesstoff nach einem der vorhergehenden Ansprüche, **dadurch gekennzeichnet, dass** die Fixierschicht (A) 5 bis 50 Gew.-%, vorzugsweise 10 bis 40 Gew.-% und besonders bevorzugt 15 bis 35 Gew.-% des Gesamtgewichts der Fixiereinlage ausmachen.

6. Thermisch fixierbarer Einlagevliesstoff nach einem der vorhergehenden Ansprüche, **dadurch gekennzeichnet, dass** die Feinheit der Fasern der Fixierschicht (A) und der Schicht (B) zwischen 0,5 dtex und 40 dtex, vorzugsweise zwischen 1 dtex und 10 dtex, besonders bevorzugt zwischen 1,3 und 6 dtex beträgt.

7. Thermisch fixierbarer Einlagevliesstoff nach einem der vorhergehenden Ansprüche, **dadurch gekennzeichnet, dass** das Flächengewicht der Fixiereinlage zwischen 10 g/m² bis 300 g/m², vorzugsweise 15 g/m² bis 150 g/m², besonders bevorzugt zwischen 20 g/m² und 100 g/m² beträgt.

8. Thermisch fixierbarer Einlagevilesstoff nach einem der vorhergehenden Anspürche, **dadurch gekennzeichnet, dass** das Gewicht der Schichten (A) und (B) jeweils mindestens 5 g/m² beträgt.

9. Thermisch fixierbarer Einlagevliesstoff nach einem der vorhergehenden Ansprüche, **dadurch gekennzeichnet, dass** sich nach dem Fixieren mit einem textilen Oberstoff bei üblichen Fixierbedingungen Trennkraftwerte von mindestens 3N ergeben, gemessen nach DIN 54310:1980 mit Abweichungen in der Probengröße: 50 mm x 160 mm. Prüfstoff: 60 mm x 160 mm und Abzugsgeschwindigkeit: 160 mm/min, Fixierpresse: Kannegiesser CX 1000 oder Gygli Fusing Mod. PR 5/70.

10. Thermisch fixierbarer Einlagevliesstoff nach einem der vorhergehenden Ansprüche, **dadurch gekennzeichnet, dass** der Anteil an thermoplastischen Spinnfasern, deren Schmelz- und/oder Erweichungstemperatur im Bereich zwischen 60 und 165 °C liegt, in dem wenigstens einen Spinnfaservlies der Schicht (A) wenigstens 90 Gew.-%. vorzugsweise 95 Gew.-% (bezogen auf die Schicht (A)) beträgt.

11. Verfahren zur Herstellung eines erfindungsgemäßen thermisch fixierbaren Einlagevliesstoffs gemäß einem der Ansprüche 1 bis 10, **dadurch gekennzeichnet, dass** es die folgenden Schritte umfasst:
a) Bereitstellen einer Fixierschicht (A) aus mindestens einem Spinnfaservlies, das zu 50 Gew.-% bis 100 Gew.-% verschmolzene und/oder nicht verschmolzene thermoplastische Spinnfasern aufweist, deren Schmelz- und/oder Erweichungstemperatur im Bereich zwischen 60 und 165 °C liegt,
b) Bereitstellen einer Schicht (B) aus mindestens einem Spinnfaservlies oder einem Spinnfaservliesstoff, das/der einen Anteil von 80 Gew% bis 100 Gew% an Spinnfasern aufweist, die eine Erweichungs- und Schmelztemperatur oder, falls nicht vorhanden, eine Zersetzungstemperatur größer als 170 °C aufweisen, und
c) Verbinden (C) der Fixierschicht (A) mit Schicht (B).

12. Verfahren nach Anspruch 11, **dadurch gekennzeichnet, dass** das Verbinden in Schritt c) durch eine mechanische Behandlung, insbesondere eine Wasserstrahlbehandlung oder Nadeltechnik, eine thermische Behandlung, insbesondere bei einer Temperatur oberhalb der Schmelz- oder Erweichungstemperatur der thermoplastischen Fasern, oder eine chemische Behandlung erfolgt.

13. Verfahren nach Anspruch 11 oder 12, **dadurch gekennzeichnet, dass** das Verfahren zum Verbinden der Schichten (A) und (B) so geführt wird, dass beide Schichten optisch voneinander unterscheidbar sind.

14. Verfahren zum Verbinden eines thermisch fixierbaren Einlagevliesstoffs nach einem der Ansprüche 1 bis 10 mit einem textilen Substrat (Oberstoff), **dadurch gekennzeichnet, dass** der thermisch fixierbare Einlagevliesstoff ohne zusätzlichen Schmelzkleberauftrag auf eine Temperatur gleich oder oberhalb der Schmelz- oder Erweichungstemperatur der thermoplastischen Fasern der Schicht (A) erwärmt und mit dem textilen Substrat (C) verklebt wird.

15. Verfahren nach Anspruch 14, **dadurch gekennzeichnet, dass** das textile Substrat (C) ausgewählt ist aus Cellulose, regenerierter Cellulose, Wolle, Polyester, Polyamid und/oder Mischungen davon.

16. Textilie, erhältlich durch ein Verfahren nach Anspruch 14 oder 15.

17. Bekleidungsstück, Automobilinnenverkleidung, Möbelverkleidung oder Bezug, Heimtextilie oder Hygieneartikel, Medizinprodukt enthaltend eine Textilie nach Anspruch 16.

## Claims

1. Thermally fusible bonded fibrous nonwoven web fabric interlining comprising
a) a fusing layer (A) consisting of at least one fibrous nonwoven manufactured staple fibre web which includes not less than 50% by weight (based on layer (A)) of fused and/or unfused thermoplastic staple fibre whose melting and/or softening temperature lies in the range between 60 and 165°C and which have an average fibre length of 5 mm to 150 mm and a linear density between 0.5 to 40 dtex, and also
b) a layer (B) consisting of at least one fibrous nonwoven manufactured staple fibre web or a bonded fibrous nonwoven manufactured staple fibre web fabric which each include from 80% by weight to 100% by weight (based on layer (B)) of manufactured staple fibres which have a softening and melting temperature or, if nonexistent, a decomposition temperature greater than 170°C and also an average fibre length of 5 mm to 150 mm and a linear density between 0.5 to 40 dtex, wherein
c) the layers (A) and (B) are attached to each other via thermal, spunlace, mechanical, chemical, ultrasonic or laser treatment methods, wherein
d) the fusing layer (A) comprises 5% to 50% by weight of the overall weight of the fusible interlining and the layer (B) comprises from 50% to 95% by weight of the overall weight of the fusible interlining;
**characterized in that** the thermally fusible bonded fibrous nonwoven fabric interlining is devoid of any additional application of hot-melt adhesive for attachment to a textile outerwear fabric.

2. Thermally fusible bonded fibrous nonwoven web fabric interlining according to Claim 1, **characterized in that** the melting or softening temperature of the thermoplastic fibres of layer (A) lies between 75°C and 140°C.

3. Thermally fusible bonded fibrous nonwoven web fabric interlining according to any preceding claim, **characterized in that** the fibrous nonwoven manufactured staple fibre web of fusing layer (A) includes thermoplastic fibres comprising copolyamide, polyester, copolyester, polyolefin, polypropylene, polyethylene, polyvinyl acetate, ethylene-vinyl acetate, polylactic acid or (ethylene)methacrylic acid; or copolymers thereof.

4. Thermally fusible bonded fibrous nonwoven web fabric interlining according to any preceding claim, **characterized in that** the fibrous nonwoven manufactured staple fibre web or the bonded fibrous nonwoven manufactured staple fibre web fabric of layer (B) includes fibres comprising polyamide, polyester, native or regenerated cellulose, m- or p-aramid, melamine resin, wool or copolymers thereof.

5. Thermally fusible bonded fibrous nonwoven web fabric interlining according to any preceding claim, **characterized in that** the fusing layer (A) comprises from 5% to 50% by weight, preferably from 10% to 40% by weight and more preferably from 15% to 35% by weight of the overall weight of the fusible interlining.

6. Thermally fusible bonded fibrous nonwoven web fabric interlining according to any preceding claim, **characterized in that** the linear density of the fibres of fusing layer (A) and of layer (B) is between 0.5 dtex and 40 dtex, preferably between 1 dtex and 10 dtex and more preferably between 1.3 and 6 dtex.

7. Thermally fusible bonded fibrous nonwoven web fabric interlining according to any preceding claim, **characterized in that** the basis weight of the fusible interlining is between 10 g/m² to 300 g/m², preferably 15 g/m² to 150 g/m² and more preferably between 20 g/m² and 100 g/m².

8. Thermally fusible bonded fibrous nonwoven web fabric interlining according to any preceding claim, **characterized in that** the weight of layers (A) and (B) is not less than 5 g/m² in either case.

9. Thermally fusible bonded fibrous nonwoven web fabric interlining according to any preceding claim, **characterized in that** fusing to a textile outerwear fabric under customary fusing conditions results in adherence values of not less than 3 N, as measured to standard specification DIN 54310:1980 with deviations in the sample size: 50 mm x 150 mm, test material: 60 mm x 160 mm and drawing-off speed: 150 mm/min, fusing press: Kannegiesser CX 1000 or Gygil Fusing Mod. PR 5/70.

10. Thermally fusible bonded fibrous nonwoven web fabric interlining according to any preceding claim, **characterized in that** the proportion of thermoplastic staple fibres whose melting and/or softening temperature lies in the range between 60 and 165°C in the at least one fibrous nonwoven manufactured staple fibre web of layer (A) is not less than 90% by weight, preferably 95% by weight (based on layer (A).

11. Process for producing a thermally fusible bonded fibrous nonwoven web fabric interlining according to any of Claims 1 to 10 of the present invention, **characterized in that** it comprises the following steps:
a) providing a fusing layer (A) comprising at least one fibrous nonwoven manufactured staple fibre web which includes from 50% by weight to 100% by weight of fused and/or unfused thermoplastic staple fibres whose melting and/or softening temperature lies in the range between 60 and 165°C,
b) providing a layer (B) consisting of at least one fibrous nonwoven manufactured staple fibre web or a bonded fibrous nonwoven manufactured staple fibre web fabric which each include from 80% by weight to 100% by weight of manufactured staple fibres which have a softening and melting temperature or, if nonexistent, a decomposition temperature greater than 170°C, and
c) attaching (C) the fusing layer (A) to layer (B).

12. Process according to Claim 11, **characterized in that** the attaching in step c) is effected by a mechanical treatment, especially a spunlace treatment or needling technique, a thermal treatment, especially at a temperature above the melting and/or softening temperature of the thermoplastic fibres, or a chemical treatment.

13. Process according to Claim 11 or 12, **characterized in that** the process for attaching layers (A) and (B) is conducted such that the two layers are visually distinguishable from each other.

14. Process for attaching a thermally fusible bonded fibrous nonwoven web fabric interlining according to any of Claims 1 to 10 to a textile substrate (outerwear fabric), **characterized in that** the thermally fusible bonded fibrous nonwoven web fabric interlining without additional hot-melt adhesive add-on is heated to a temperature not less than the melting or softening temperature of the thermoplastic fibres of layer (A) and adhered to the textile substrate (C).

15. Process according to Claim 14, **characterized in that** the textile substrate (C) is selected from cellulose, regenerated cellulose, wool, polyester, polyamide and/or mixtures thereof.

16. Textile obtainable by a process according to Claim 14 or 15.

17. Garment, automotive interior lining, furniture lining or cover, home furnishing textile or hygiene article, medical device comprising a textile according to Claim 16.

## Revendications

1. Triplure en non-tissé thermofixable, comprenant :
a) une couche de fixation (A) constituée d'au moins un non-tissé de fibres courtes, qui comprend une proportion d'au moins 50 % en poids (par rapport à la couche (A)) de fibres courtes thermoplastiques fondues et/ou non fondues, dont la température de fusion et/ou de ramollissement se situe dans la plage comprise entre 60 et 165 °C, qui présentent une longueur découpée moyenne de 5 mm à 150 mm et une finesse comprise entre 0,5 et 40 dtex, ainsi que
b) une couche (B) constituée d'au moins un non-tissé de fibres courtes ou d'un tissu non-tissé de fibres courtes, qui comprend une proportion de 80 % en poids à 100 % en poids (par rapport à la couche (B)) de fibres courtes, qui présentent une température de ramollissement et de fusion ou, si celle-ci n'existe pas, une température de décomposition supérieure à 170 °C, ainsi qu'une longueur découpée moyenne de 5 mm à 150 mm et une finesse comprise entre 0,5 et 40 dtex,
c) les couches (A) et (B) étant reliées l'une à l'autre par des procédés de traitement thermiques, à jet d'eau, mécaniques, chimiques, ultrasonores ou laser,
d) la couche de fixation (A) représentant 5 à 50 % en poids du poids total de la triplure de fixation et la couche (B) représentant 50 à 95 % en poids du poids total de la triplure de fixation ;
**caractérisée en ce que** la triplure en non-tissé thermofixable ne comprend pas de couche supplémentaire de colle thermofusible pour la liaison à une couche extérieure textile.

2. Triplure en non-tissé thermofixable selon la revendication 1, **caractérisée en ce que** la température de fusion ou de ramollissement des fibres thermoplastiques de la couche (A) est comprise entre 75 °C et 140 °C.

3. Triplure en non-tissé thermofixable selon l'une quelconque des revendications précédentes, **caractérisée en ce que** le non-tissé de fibres courtes de la couche de fixation (A) comprend des fibres thermoplastiques de copolyamide, polyester, copolyester, polyoléfine, polypropylène, polyéthylène, polyacétate de vinyle, acétate d'éthylène-vinyle, acide polylactique ou acide (éthylène)méthacrylique ; ou leurs copolymères.

4. Triplure en non-tissé thermofixable selon l'une quelconque des revendications précédentes, **caractérisée en ce que** le non-tissé de fibres courtes ou le tissu non-tissé de fibres courtes de la couche (B) comprend des fibres de polyamide, polyester, cellulose naturelle ou régénérée, m- ou p-aramide, résine de mélamine, laine ou leurs copolymères.

5. Triplure en non-tissé thermofixable selon l'une quelconque des revendications précédentes, **caractérisée en ce que** la couche de fixation (A) représente 5 à 50 % en poids, de préférence 10 à 40 % en poids et de manière particulièrement préférée 15 à 35 % en poids du poids total de la triplure de fixation.

6. Triplure en non-tissé thermofixable selon l'une quelconque des revendications précédentes, **caractérisée en ce que** la finesse des fibres de la couche de fixation (A) et de la couche (B) est comprise entre 0,5 dtex et 40 dtex, de préférence entre 1 dtex et 10 dtex, de manière particulièrement préférée entre 1,3 et 6 dtex.

7. Triplure en non-tissé thermofixable selon l'une quelconque des revendications précédentes, **caractérisée en ce que** le poids superficiel de la triplure de fixation est compris entre 10 g/m² et 300 g/m², de préférence entre 15 g/m² et 150 g/m², de manière particulièrement préférée entre 20 g/m² et 100 g/m².

8. Triplure en non-tissé thermofixable selon l'une quelconque des revendications précédentes, **caractérisée en ce que** le poids des couches (A) et (B) est à chaque fois d'au moins 5 g/m².

9. Triplure en non-tissé thermofixable selon l'une quelconque des revendications précédentes, **caractérisée en ce qu'**elle présente, après fixation avec une couche extérieure textile dans des conditions de fixation usuelles, des valeurs de force de séparation d'au moins 3 N, mesurées selon DIN 54310:1980 avec des déviations de la taille de l'échantillon : 50 mm x 150 mm, matière testée : 60 mm x 160 mm et vitesse de retrait : 150 mm/min, presse de fixation : Kannegiesser CX 1000 ou Gygli Fusing Mod. PR 5/70.

10. Triplure en non-tissé thermofixable selon l'une quelconque des revendications précédentes, **caractérisée en ce que** la proportion de fibres courtes thermoplastiques dont la température de fusion et/ou de ramollissement se situe dans la plage comprise entre 60 et 165 °C dans le ou les non-tissés de fibres courtes de la couche (A) est d'au moins 90 % en poids, de préférence de 95 % en poids (par rapport à la couche (A)).

11. Procédé de fabrication d'une triplure en non-tissé thermofixable selon l'invention selon l'une quelconque des revendications 1 à 10, **caractérisé en ce qu'**il comprend les étapes suivantes :
a) la préparation d'une couche de fixation (A) constituée d'au moins un non-tissé de fibres courtes, qui comprend 50 % en poids à 100 % en poids de fibres courtes thermoplastiques fondues et/ou non fondues, dont la température de fusion et/ou de ramollissement se situe dans la plage comprise entre 60 et 165 °C,
b) la préparation d'une couche (B) constituée d'au moins un non-tissé de fibres courtes ou d'un tissu non-tissé de fibres courtes, qui comprend une proportion de 80 % en poids à 100 % en poids de fibres courtes, qui présentent une température de ramollissement et de fusion ou, si celle-ci n'existe pas, une température de décomposition supérieure à 170 °C, et
c) la liaison (C) de la couche de fixation (A) avec la couche (B).

12. Procédé selon la revendication 11, **caractérisé en ce que** la liaison à l'étape c) a lieu par un traitement mécanique, notamment un traitement par un jet d'eau ou une technique d'aiguille, un traitement thermique, notamment à une température supérieure à la température de fusion ou de ramollissement des fibres thermoplastiques, ou un traitement chimique.

13. Procédé selon la revendication 11 ou 12, **caractérisé en ce que** le procédé de liaison des couches (A) et (B) est réalisé de manière à ce que les deux couches soient différentiables optiquement l'une de l'autre.

14. Procédé de liaison d'une triplure de non-tissé thermofixable selon l'une quelconque des revendications 1 à 10 avec un substrat textile (couche extérieure), **caractérisé en ce que** la triplure de non-tissé thermofixable sans couche supplémentaire de colle thermofusible est portée à une température supérieure ou égale à la température de fusion ou de ramollissement des fibres thermoplastiques de la couche (A) et collée avec le substrat textile (C).

15. Procédé selon la revendication 14, **caractérisé en ce que** le substrat textile (C) est choisi parmi la cellulose, la cellulose régénérée, la laine, le polyester, le polyamide et/ou leurs mélanges.

16. Textile, pouvant être obtenu par un procédé selon la revendication 14 ou 15.

17. Vêtement, revêtement automobile, revêtement de meuble ou enveloppe, textile pour la maison ou article d'hygiène, produit médical contenant un textile selon la revendication 16.
